# EUROPEAN PATENT APPLICATION

(11) **EP 2 999 152 A1**
(43) Date of publication of application: **23.03.2016**
(21) Application number: 13884481.6
(22) Date of filing: 17.05.2013
(51) Int. Cl.: H04L 1/00

(54) **DATA PROCESSING METHOD AND RELATED DEVICE FOR FEC CODING AND DECODING**

(71) Applicant: Huawei Technologies Co., Ltd., Longgang District Shenzhen, Guangdong 518129 (CN)
(72) Inventor: ZHONG, Qiwen, Shenzhen Guangdong 518129 (CN)
(74) Representative: Isarpatent
(86) International application number: PCT/CN2013/075810
(87) International publication number: WO 2014/183299

(57) **Abstract**

An FEC coding/decoding data processing method and a related apparatus are provided. The method includes: performing, at an FEC coding processing sublayer by using m data code blocks as one group, FEC coding on a data code block sequence output by a physical coding sublayer, to generate n FEC check code blocks; respectively distributing mxt2 data code blocks and nxt2 FEC check code blocks to M virtual channels of a first virtual channel group and N virtual channels of a second virtual channel group, where mxt2 is less than or equal to m_max, m_max is t1 times the value of M, n is less than or equal to n_max, n_max is t1 times the value of N, and m, n, t1, and t2 are positive integers; and respectively multiplexing, according to geared speed bit by bit multiplexing, data distributed to the first virtual channel group and data distributed to the second virtual channel group to at most H interfaces of a first physical channel group and at most K interfaces of a second physical channel group, where M is an integral multiple of H, and N is an integral multiple of K.

## Description

### TECHNICAL FIELD

Embodiments of the present invention relate to the field of communications, and in particular, to an FEC coding/decoding data processing method and a related apparatus.

### BACKGROUND

A forward error correction (FEC, Forward Error Correction) coding/decoding technology is a technology that is used to improve transmission system performance in a communications system. For using the FEC, an FEC coding/decoding algorithm and a processing apparatus need to be introduced into a source and a sink of a transmission system, and check overhead data generated at the source during FEC coding needs to be extra transmitted in the transmission system. In a typical single-channel communications transmission system, transmission of original information data and FEC check overhead data is implemented mainly by improving a line transmission rate. For example, in typical RS(255, 239), original information of 239 bytes increases to information of 255 bytes after FEC coding; therefore, when the transmission system transmits coded data, compared with a case in which coding is not performed, the transmission rate needs to be improved.

With the development of network technologies, a bandwidth rate of an information transmission interface of an optical communications system is developing from 10 Gbps and 40 Gbps to 100 Gbps and 400 Gbps, and even to 1 Tbps and 1.6 TGbps. In order to transmit such a huge amount of information within unit time, it needs to improve a transmission capability of the system in the following feasible dimensions: firstly, increasing a symbol transmission rate in the single-channel transmission system, secondly, carrying a larger amount of information in one transmitted symbol, and finally, adopting a multichannel transmission system.

At present, the Institute of Electrical and Electronics Engineers (IEEE, Institute of Electrical and Electronics Engineers) in America is considering and gradually adopts a higher-order code modulation technology that can perform direct detection and reception, such as pulse amplitude modulation (PAM, Pulse Amplitude Modulation)4, PAM8, PAM16, or carrierless amplitude phase modulation (CAP, Carrierless Amplitude Phase Modulation) 16, to increase the amount of information carried on a symbol, for example, designing a compact interface transmission module in 100 Gigabit Ethernet (GE, Gigabit Ethernet), 400GE, or the like. For a future interface with 400GE or a higher information rate, a manner of only improving a single-channel symbol transmission capability is gradually experiencing a bottleneck; a multichannel technology and a higher-order code modulation technology become other two main dimensions in the follow-up development, and a reasonable compromise consideration needs to be performed on the three dimensions. The higher-order code modulation introduces a larger amount of information in one transmission symbol, which causes degradation of a signal-to-noise ratio of the system, thereby significantly reducing transmission bit error performance of the system, so that the system is affected by a transmission bit error more easily. In such a background, introducing the FEC coding becomes an inevitable consideration; and how to combine the FEC coding/decoding technology and a current transmission system in a suitable manner to transmit FEC check overhead data becomes an important research subject.

A method, existing in the prior art, for transmitting FEC check overhead data is that one channel is used between two communication entities to transmit original information data and FEC check overhead data, and merely a conventional non-return-to-zero code (NRZ, Non Return to Zero code) line transmission code pattern is used. A transmission rate of an NRZ line after the FEC is added is 10.3125 bauds (Baud). Compared with a transmission rate of a same NRZ line in which the FEC is not used, because higher-order code modulation is not used, data traffic that can be actually transmitted is reduced. Transmitting the FEC check overhead data by occupying bandwidth of transmitting the original information data causes a decrease of available bandwidth of actually transmitting the original information data.

Another method, existing in the prior art, for transmitting FEC check overhead data is that redundant overhead of a synchronization header of a code block is compressed based on 64/66b coding, where after being compressed, a 64/66b code block becomes a 64/65b code block, with redundant information of 1 bit removed; and then original information data of 2080 bits and FEC check overhead data of 32 bits are generated in total by using Fire Code FEC (2112, 2080). Because added FEC check overhead data is counteracted by compressing the redundant overhead of the synchronization header in the code conversion process from the 64/66b code block to the 64/65b code block, a transmission rate of an NRZ line is not improved actually. An FEC overhead carrying capability provided by the manner is finite, and an error correction capability of the selected FEC is finite; therefore, the method is not appropriate to a case with a higher actual line bit error rate, and especially with a system in which a higher-order modulation code pattern is introduced. In addition, in the implementation method, compression needs to be separately performed on each channel; if FEC coding/decoding is performed separately on 4 channels, a quadruple coding/decoding latency will be introduced, which introduces a relatively high FEC coding/decoding latency in a multichannel system and is not appropriate to an occasion with a low-latency requirement.

### SUMMARY

Embodiments of the present invention provide an FEC coding/decoding data processing method and a related apparatus, where FEC check overhead data is transmitted without reducing actual available data transmission bandwidth of a system, and FEC coding/decoding of overall data streams is also allowed, which are applicable to an occasion with a low-latency requirement.

According to a first aspect, an embodiment of the present invention provides an FEC coding data processing method, including:
performing, at a forward error correction FEC coding processing sublayer by using m data code blocks as one group, FEC coding on a data code block sequence output by a physical coding sublayer, to generate n FEC check code blocks, where both m and n are positive integers;
respectively distributing m×t2 data code blocks and n×t2 FEC check code blocks to M virtual channels of a first virtual channel group and N virtual channels of a second virtual channel group, where m×t2 is less than or equal to m_max, m_max is t1 times the value of M, n is less than or equal to n_max, n_max is t1 times the value of N, and t1 and t2 are positive integers; and
respectively multiplexing, according to geared speed bit by bit multiplexing, data distributed to the first virtual channel group and data distributed to the second virtual channel group to at most H interfaces of a first physical channel group and at most K interfaces of a second physical channel group, where M is an integral multiple of H, and N is an integral multiple of K.

With reference to the first aspect, in a first possible implementation manner of the first aspect, after the m data code blocks and the n FEC check code blocks are respectively distributed to the M virtual channels of the first virtual channel group and the N virtual channels of the second virtual channel group, the method further includes:
periodically inserting alignment marker code blocks into code block streams carried on (M+N) virtual channels of the first virtual channel group and the second virtual channel group, where each alignment marker code block further marks a number of a virtual channel on which the alignment marker code block is located, and the alignment marker code block is used for a receive end to perform alignment, reassembly, and recovery on the code block streams after acquiring the code block streams.

With reference to the first aspect or the first possible implementation manner of the first aspect, in a second possible implementation manner of the first aspect, the at most H interfaces of the first physical channel group specifically are H1 electrical interfaces and H2 optical interfaces, and the at most K interfaces of the second physical channel group specifically are K1 electrical interfaces and K2 optical interfaces, where H is the least common multiple of H1 and H2, and K is the least common multiple of K1 and K2; and
the respectively multiplexing, according to geared speed bit by bit multiplexing, data distributed to the first virtual channel group and data distributed to the second virtual channel group to at most H interfaces of a first physical channel group and at most K interfaces of a second physical channel group includes:
respectively multiplexing, according to the geared speed bit by bit multiplexing, the data distributed to the first virtual channel group and the data distributed to the second virtual channel group to the H1 electrical interfaces of the first physical channel group and the K1 electrical interfaces of the second physical channel group, where M is an integral multiple of H1, and N is an integral multiple of K1; and
after separately performing multiplexing, mapping, and modulation on all data multiplexed to the H1 electrical interfaces and all data multiplexed to the K1 electrical interfaces, sending the data respectively to the H2 optical interfaces and the K2 optical interfaces, where M is an integral multiple of H2, and N is an integral multiple of K2.

With reference to the first aspect or the first possible or second possible implementation manner of the first aspect, in a third possible implementation manner of the first aspect, after the performing, at a forward error correction FEC coding processing sublayer, FEC coding on m data code blocks output by a physical coding sublayer, to generate n FEC check code blocks, the method further includes:
generating i idle code blocks, where the idle code block includes idle information bits, and i equals n_max minus n; and
distributing the i idle code blocks to the N virtual channels of the first virtual channel group, where the data distributed to the first virtual channel group includes the n FEC check code blocks and the i idle code blocks.

With reference to the first aspect or the first possible or second possible or third possible implementation manner of the first aspect, in a fourth possible implementation manner of the first aspect, after the respectively multiplexing, according to geared speed bit by bit multiplexing, data distributed to the first virtual channel group and data distributed to the second virtual channel group to at most H interfaces of a first physical channel group and at most K interfaces of a second physical channel group, the method further includes:
discarding all data multiplexed to the at most K interfaces, and transmitting all data multiplexed to the at most H interfaces to the receive end through a physical transmission medium.

With reference to the first aspect or the first possible or second possible or third possible or fourth possible implementation manner of the first aspect, in a fifth possible implementation manner of the first aspect, after the respectively multiplexing, according to geared speed bit by bit multiplexing, data distributed to the first virtual channel group and data distributed to the second virtual channel group to at most H interfaces of a first physical channel group and at most K interfaces of a second physical channel group, the method further includes:
transmitting all data multiplexed to the at most H interfaces and all data multiplexed to the at most K interfaces to the receive end through a physical transmission medium.

With reference to the third possible implementation manner of the first aspect, in a sixth possible implementation manner of the first aspect, after the respectively multiplexing, according to geared speed bit by bit multiplexing, data distributed to the first virtual channel group and data distributed to the second virtual channel group to at most H interfaces of a first physical channel group and at most K interfaces of a second physical channel group, the method further includes:
discarding the i idle code blocks in all data multiplexed to the at most K interfaces, and transmitting all data multiplexed to the at most H interfaces and the n FEC check code blocks in all data multiplexed to the at most K interfaces to the receive end through a physical transmission medium.

With reference to the first aspect or the first possible or second possible or third possible or fourth possible or fifth possible or sixth possible implementation manner of the first aspect, in a seventh possible implementation manner of the first aspect, the m data code blocks and the n FEC check code blocks are distinguished by using different synchronization headers.

According to a second aspect, an embodiment of the present invention provides an FEC decoding data processing method, including:
receiving data that is sent by a transmit end to a receive end through at most H interfaces of a first physical channel group, where H is a positive integer;
determining whether there is data sent by the transmit end to the receive end through at most K interfaces of a second physical channel group, where K is a positive integer; and
if there is data sent by the transmit end through the at most K interfaces of the second physical channel group, receiving the data sent through the at most K interfaces, or, discarding the data sent through the at most K interfaces.

With reference to the second aspect, in a first possible implementation manner of the second aspect, after the discarding the data sent through the at most K interfaces, the method further includes:
extracting, according to geared speed bit by bit demultiplexing, M data code block streams from the data sent through the at most H interfaces, where M is an integral multiple of H, and the M data code block streams correspond to M virtual channels of a first virtual channel group;
searching for alignment marker code blocks inserted into the data code block streams on the M virtual channels;
aligning and reassembling, according to the alignment marker code blocks, code block sequences that undergo code block distribution on the M virtual channels, to obtain m×t2 data code blocks, where m×t2 is less than or equal to m_max, m_max is t1 times the value of M, and t1 and t2 are positive integers;
discarding the alignment marker code blocks after completing the alignment and reassembly by using the alignment marker code blocks; and
inputting the m×t2 data code blocks to a physical coding sublayer.

With reference to the second aspect, in a second possible implementation manner of the second aspect, after the receiving the data sent through the at most K interfaces, the method further includes:
extracting, according to geared speed bit by bit demultiplexing, M data code block streams from the data sent through the at most H interfaces, and extracting, according to the geared speed bit by bit demultiplexing, N FEC check code block streams from the data sent through the at most K interfaces, where M is an integral multiple of H, the M data code block streams correspond to M virtual channels of a first virtual channel group, N is an integral multiple of K, and the N data code block streams correspond to N virtual channels of a second virtual channel group;
searching for alignment marker code blocks inserted into (M+N) code block streams that are formed by the data code block streams on the M virtual channels and FEC check code blocks on the N virtual channels;
aligning and reassembling, according to the alignment marker code blocks, code block sequences that undergo code block distribution on the (M+N) virtual channels, to obtain m×t2 data code blocks and n×t2 FEC check code blocks, where m×t2 is less than or equal to m_max, m_max is t1 times the value of M, n is less than or equal to n_max, n_max is t1 times the value of N, and t1 and t2 are positive integers; and
discarding the alignment marker code blocks after completing the alignment and reassembly by using the alignment marker code blocks.

With reference to the second aspect, in a third possible implementation manner of the second aspect, after the receiving the data sent through the at most K interfaces, the method further includes:
extracting, according to geared speed bit by bit demultiplexing, M data code block streams from the data sent through the at most H interfaces, and extracting, according to the geared speed bit by bit demultiplexing, N FEC check code block streams from the data sent through the at most K interfaces, where M is an integral multiple of H, the M data code block streams correspond to M virtual channels of a first virtual channel group, N is an integral multiple of K, and the N data code block streams correspond to N virtual channels of a second virtual channel group;
searching for alignment marker code blocks inserted into code block streams that are formed by the data code block streams on the M virtual channels and FEC check code blocks on the N virtual channels;
aligning and reassembling, according to the alignment marker code blocks, the code block streams on the (M+N) virtual channels, to obtain m×t2 data code blocks, n×t2 FEC check code blocks, and i idle code blocks, where m×t2 is less than or equal to m_max, m_max is t1 times the value of M, n×t2 is less than n_max, n_max is t1 times the value of N, t1 and t2 are positive integers, and i equals n_max minus n; and
discarding the alignment marker code blocks and the i idle code blocks after completing the alignment and reassembly by using the alignment marker code blocks.

With reference to the second possible or third possible implementation manner of the second aspect, in a fourth possible implementation manner of the second aspect, after the discarding the alignment marker code blocks after completing the alignment and reassembly by using the alignment marker code blocks, the method further includes:
correcting, at an FEC coding processing sublayer, a bit error in the m×t2 data code blocks by using the n×t2 FEC check code blocks; and
discarding the n×t2 FEC check code blocks after completing the correcting a bit error, and inputting m×t2 data code blocks that are obtained after correcting the bit error to a physical coding sublayer.

With reference to the second possible or third possible implementation manner of the second aspect, in a fifth possible implementation manner of the second aspect, after the discarding the alignment marker code blocks after completing the alignment and reassembly by using the alignment marker code blocks, the method further includes:
after acquiring the n×t2 FEC check code blocks by alignment and reassembly, discarding the n×t2 FEC check code blocks, and inputting the m×t2 data code blocks to a physical coding sublayer.

According to a third aspect, an embodiment of the present invention provides an FEC coding data processing apparatus, including:
an FEC coding unit, configured to perform, at a forward error correction FEC coding processing sublayer by using m data code blocks as one group, FEC coding on a data code block sequence output by a physical coding sublayer, to generate n FEC check code blocks, where both m and n are positive integers;
a distributing unit, configured to respectively distribute m×t2 data code blocks and n×t2 FEC check code blocks to M virtual channels of a first virtual channel group and N virtual channels of a second virtual channel group, where m×t2 is less than or equal to m_max, m_max is t1 times the value of M, n×t2 is less than or equal to n_max, n_max is t1 times the value of N, and t1 and t2 are positive integers; and
a multiplexing unit, configured to respectively multiplex, according to geared speed bit by bit multiplexing, data distributed to the first virtual channel group and data distributed to the second virtual channel group to at most H interfaces of a first physical channel group and at most K interfaces of a second physical channel group, where M is an integral multiple of H, and N is an integral multiple of K.

With reference to the third aspect, in a first possible implementation manner of the third aspect, the apparatus further includes:
an aligning unit, configured to periodically insert alignment marker code blocks into code block streams carried on (M+N) virtual channels of the first virtual channel group and the second virtual channel group, where each alignment marker code block further marks a number of a virtual channel on which the alignment marker code block is located, and the alignment marker code block is used for a receive end to perform alignment, reassembly, and recovery after acquiring the code block streams.

With reference to the third aspect or the first possible implementation manner of the third aspect, in a second possible implementation manner of the third aspect, the at most H interfaces of the first physical channel group specifically are H1 electrical interfaces and H2 optical interfaces, and the at most K interfaces of the second physical channel group specifically are K1 electrical interfaces and K2 optical interfaces, where H is the least common multiple of H1 and H2, and K is the least common multiple of K1 and K2; and
the multiplexing unit includes:
a multiplexing subunit, configured to respectively multiplex, according to the geared speed bit by bit multiplexing, the data distributed to the first virtual channel group and the data distributed to the second virtual channel group to the H1 electrical interfaces of the first physical channel group and the K1 electrical interfaces of the second physical channel group, where H1 is an integral multiple of M, and K1 is an integral multiple of N; and
a mapping subunit, configured to: after multiplexing, mapping, and modulation are separately performed on all data multiplexed to the H1 electrical interfaces and all data multiplexed to the K1 electrical interfaces, send the data respectively to the H2 optical interfaces and the K2 optical interfaces, where M is an integral multiple of H2, and N is an integral multiple of K2.

With reference to the third aspect or the first possible or second possible implementation manner of the third aspect, in a third possible implementation manner of the third aspect, the apparatus further includes: a generating unit, configured to generate i idle code blocks, where the idle code block includes idle information bits, and i equals n_max minus n; and
the distributing unit is further configured to distribute the i idle code blocks to the N virtual channels of the first virtual channel group, where the data distributed to the first virtual channel group includes the n FEC check code blocks and the i idle code blocks.

With reference to the third aspect or the first possible or second possible or third possible implementation manner of the third aspect, in a fourth possible implementation manner of the third aspect, the apparatus further includes:
a first discarding unit, configured to discard all data multiplexed to the at most K interfaces; and
a first transmitting unit, configured to transmit all data multiplexed to the at most H interfaces to the receive end through a physical transmission medium.

With reference to the third aspect or the first possible or second possible or third possible or fourth possible implementation manner of the third aspect, in a fifth possible implementation manner of the third aspect, the apparatus further includes:
a second transmitting unit, configured to transmit all data multiplexed to the at most H interfaces and all data multiplexed to the at most K interfaces to the receive end through a physical transmission medium.

With reference to the third possible implementation manner of the third aspect, in a sixth possible implementation manner of the third aspect, the apparatus further includes:
a second discarding unit, configured to discard the i idle code blocks in all data multiplexed to the at most K interfaces; and
a third transmitting unit, configured to transmit all data multiplexed to the at most H interfaces and the n FEC check code blocks in all data multiplexed to the at most K interfaces to the receive end through a physical transmission medium.

According to a fourth aspect, an embodiment of the present invention provides an FEC decoding data processing apparatus, including: a first receiving unit, a determining unit, and one unit of a second receiving unit and a first discarding unit, where:
the first receiving unit is configured to receive data that is sent by a transmit end to a receive end through at most H interfaces of a first physical channel group, where H is a positive integer;
the determining unit is configured to determine whether there is data sent by the transmit end to the receive end through at most K interfaces of a second physical channel group; and
the second receiving unit is configured to: when there is data sent by the transmit end through the at most K interfaces of the second physical channel group, receive the data sent through the at most K interfaces, where K is a positive integer; or
the first discarding unit is configured to: when there is data sent by the transmit end through the at most K interfaces of the second physical channel group, discard the data sent through the at most K interfaces.

With reference to the fourth aspect, in a first possible implementation manner of the fourth aspect, if the apparatus includes the first discarding unit, the apparatus further includes: a first demultiplexing unit, a first searching unit, a first aligning unit, and a first transmitting unit, where:
the first demultiplexing unit is configured to extract, according to geared speed bit by bit demultiplexing, M data code block streams from the data sent through the at most H interfaces, where M is an integral multiple of H, and the M data code block streams correspond to M virtual channels of a first virtual channel group;
the first searching unit is configured to search for alignment marker code blocks inserted into the data code block streams on the M virtual channels;
the first aligning unit is configured to align and reassemble, according to the alignment marker code blocks, code block sequences that undergo code block distribution on the M virtual channels, to obtain m×t2 data code blocks, where m×t2 is less than or equal to m_max, m_max is t1 times the value of M, and t1 and t2 are positive integers;
the first discarding unit is further configured to discard the alignment marker code blocks after completing the alignment and reassembly by using the alignment marker code blocks; and
the first transmitting unit is configured to input the m×t2 data code blocks to a physical coding sublayer.

With reference to the fourth aspect, in a second possible implementation manner of the fourth aspect, if the apparatus includes the second receiving unit, the apparatus further includes: a second demultiplexing unit, a second searching unit, a second aligning unit, and a second discarding unit, where:
the second demultiplexing unit is configured to extract, according to geared speed bit by bit demultiplexing, M data code block streams from the data sent through the at most H interfaces, and extract, according to the geared speed bit by bit demultiplexing, N FEC check code block streams from the data sent through the at most K interfaces, where M is an integral multiple of H, the M data code block streams correspond to M virtual channels of a first virtual channel group, N is an integral multiple of K, and the N data code block streams correspond to N virtual channels of a second virtual channel group;
the second searching unit is configured to search for alignment marker code blocks inserted into (M+N) code block streams that are formed by the data code block streams on the M virtual channels and FEC check code blocks on the N virtual channels;
the second aligning unit is configured to align and reassemble, according to the alignment marker code blocks, the code block streams on the (M+N) virtual channels, to obtain m×t2 data code blocks and n×t2 FEC check code blocks, where m×t2 is less than or equal to m_max, m_max is t1 times the value of M, n is less than or equal to n_max, n_max is t1 times the value of N, and t1 and t2 are positive integers; and
the second discarding unit is configured to discard the alignment marker code blocks after completing the alignment and reassembly by using the alignment marker code blocks.

With reference to the fourth aspect, in a third possible implementation manner of the fourth aspect, if the apparatus includes the second receiving unit, the apparatus further includes: a second demultiplexing unit, a second searching unit, a third aligning unit, and a third discarding unit, where:
the second demultiplexing unit is configured to extract, according to geared speed bit by bit demultiplexing, M data code block streams from the data sent through the at most H interfaces, and extract, according to the geared speed bit by bit demultiplexing, N FEC check code block streams from the data sent through the at most K interfaces, where M is an integral multiple of H, the M data code block streams correspond to M virtual channels of a first virtual channel group, N is an integral multiple of K, and the N data code block streams correspond to N virtual channels of a second virtual channel group;
the second searching unit is configured to search for alignment marker code blocks inserted into (M+N) code block streams that are formed by the data code block streams on the M virtual channels and FEC check code blocks on the N virtual channels;
the third aligning unit is configured to align and reassemble, according to the alignment marker code blocks, the code block streams on the (M+N) virtual channels, to obtain m×2 data code blocks, n×t2 FEC check code blocks, and i idle code blocks, where m×t2 is less than or equal to m_max, m_max is t1 times the value of M, n×t2 is less than n_max, n_max is t1 times the value of N, t1 and t2 are positive integers, and i equals n_max minus n; and
the third discarding unit is configured to discard the alignment marker code blocks and the i idle code blocks after completing the alignment and reassembly by using the alignment marker code blocks.

With reference to the second possible or third possible implementation manner of the fourth aspect, in a fourth possible implementation manner of the fourth aspect, the apparatus further includes:
a correcting unit, configured to correct, at an FEC coding processing sublayer, a bit error in the m×t2 data code blocks by using the n×t2 FEC check code blocks;
a fourth discarding unit, configured to discard the n×t2 FEC check code blocks after completing the correcting a bit error; and
a second transmitting unit, configured to input m×t2 data code blocks that are obtained after correcting the bit error to a physical coding sublayer.

With reference to the second possible or third possible implementation manner of the fourth aspect, in a fifth possible implementation manner of the fourth aspect, the apparatus further includes:
a fifth discarding unit, configured to: after the n×t2 FEC check code blocks by alignment and reassembly is acquired, discard the n×t2 FEC check code blocks; and
a third transmitting unit, configured to input the m×t2 data code blocks to a physical coding sublayer.

According to a fifth aspect, an embodiment of the present invention provides an FEC coding data processing apparatus, including: an input apparatus, an output apparatus, a memory, and a processor, where:
the processor performs the following steps:
   performing, at a forward error correction FEC coding processing sublayer by using m data code blocks as one group, FEC coding on a data code block sequence output by a physical coding sublayer, to generate n FEC check code blocks, where both m and n are positive integers;
   respectively distributing m×t2 data code blocks and n×t2 FEC check code blocks to M virtual channels of a first virtual channel group and N virtual channels of a second virtual channel group, where m×t2 is less than or equal to m_max, m_max is t1 times the value of M, n is less than or equal to n_max, n_max is t1 times the value of N, and t1 and t2 are positive integers; and
   respectively multiplexing, according to geared speed bit by bit multiplexing, data distributed to the first virtual channel group and data distributed to the second virtual channel group to at most H interfaces of a first physical channel group and at most K interfaces of a second physical channel group, where M is an integral multiple of H, and N is an integral multiple of K.

With reference to the fifth aspect, in a first possible implementation manner of the fifth aspect, the processor further performs the following step:
periodically inserting alignment marker code blocks into code block streams carried on (M+N) virtual channels of the first virtual channel group and the second virtual channel group, where each alignment marker code block further marks a number of a virtual channel on which the alignment marker code block is located, and the alignment marker code block is used for a receive end to perform alignment, reassembly, and recovery after acquiring the code block streams.

With reference to the fifth aspect or the first possible implementation manner of the fifth aspect, in a second possible implementation manner of the fifth aspect, the at most H interfaces of the first physical channel group specifically are H1 electrical interfaces and H2 optical interfaces, and the at most K interfaces of the second physical channel group specifically are K1 electrical interfaces and K2 optical interfaces, where H is the least common multiple of H1 and H2, and K is the least common multiple of K1 and K2; and
the processor specifically performs the following steps:
respectively multiplexing, according to the geared speed bit by bit multiplexing, the data distributed to the first virtual channel group and the data distributed to the second virtual channel group to the H1 electrical interfaces of the first physical channel group and the K1 electrical interfaces of the second physical channel group, where H1 is an integral multiple of M, and K1 is an integral multiple of N; and
after separately performing multiplexing, mapping, and modulation on all data multiplexed to the H1 electrical interfaces and all data multiplexed to the K1 electrical interfaces, sending the data respectively to the H2 optical interfaces and the K2 optical interfaces, where M is an integral multiple of H2, and N is an integral multiple of K2.

With reference to the fifth aspect or the first possible or second possible implementation manner of the fifth aspect, in a third possible implementation manner of the fifth aspect, the processor further performs the following steps:
generating i idle code blocks, where the idle code block includes idle information bits, and i equals n_max minus n; and
distributing the i idle code blocks to the N virtual channels of the first virtual channel group, where the data distributed to the first virtual channel group includes the n FEC check code blocks and the i idle code blocks.

With reference to the fifth aspect or the first possible or second possible or third possible implementation manner of the fifth aspect, in a fourth possible implementation manner of the fifth aspect, the processor further performs the following step: discarding all data multiplexed to the at most K interfaces; and
the output apparatus is configured to transmit all data multiplexed to the at most H interfaces to the receive end through a physical transmission medium.

With reference to the fifth aspect or the first possible or second possible or third possible or fourth possible implementation manner of the fifth aspect, in a fifth possible implementation manner of the fifth aspect, the output apparatus is configured to transmit all data multiplexed to the at most H interfaces and all data multiplexed to the at most K interfaces to the receive end through a physical transmission medium.

With reference to the third possible implementation manner of the fifth aspect, in a sixth possible implementation manner of the fifth aspect, the processor further performs the following step: discarding the i idle code blocks in all data multiplexed to the at most K interfaces; and
the output apparatus is configured to transmit all data multiplexed to the at most H interfaces and the n FEC check code blocks in all data multiplexed to the at most K interfaces to the receive end through a physical transmission medium.

According to a sixth aspect, an embodiment of the present invention provides an FEC decoding data processing apparatus, including: an input apparatus, an output apparatus, a memory, and a processor, where:
the processor performs the following steps:
   acquiring, from the input apparatus, data that is sent by a transmit end to a receive end through at most H interfaces of a first physical channel group, where H is a positive integer;
   determining whether there is data sent by the transmit end to the receive end through at most K interfaces of a second physical channel group, where K is a positive integer; and
   if there is data sent by the transmit end through the at most K interfaces of the second physical channel group, receiving the data sent through the at most K interfaces, or, discarding the data sent through the at most K interfaces.

With reference to the sixth aspect, in a first possible implementation manner of the sixth aspect, the processor further performs the following steps:
extracting, according to geared speed bit by bit demultiplexing, M data code block streams from the data sent through the at most H interfaces, where M is an integral multiple of H, and the M data code block streams correspond to M virtual channels of a first virtual channel group;
searching for alignment marker code blocks inserted into the data code block streams on the M virtual channels;
aligning and reassembling, according to the alignment marker code blocks, code block sequences that undergo code block distribution on the M virtual channels, to obtain m×t2 data code blocks, where m×t2 is less than or equal to m_max, m_max is t1 times the value of M, and t1 and t2 are positive integers;
discarding the alignment marker code blocks after completing the alignment and reassembly by using the alignment marker code blocks; and
inputting the m×t2 data code blocks to a physical coding sublayer.

With reference to the sixth aspect, in a second possible implementation manner of the sixth aspect, the processor further performs the following steps:
extracting, according to geared speed bit by bit demultiplexing, M data code block streams from the data sent through the at most H interfaces, and extracting, according to the geared speed bit by bit demultiplexing, N FEC check code block streams from the data sent through the at most K interfaces, where M is an integral multiple of H, the M data code block streams correspond to M virtual channels of a first virtual channel group, N is an integral multiple of K, and the N data code block streams correspond to N virtual channels of a second virtual channel group;
searching for alignment marker code blocks inserted into (M+N) code block streams that are formed by the data code block streams on the M virtual channels and FEC check code blocks on the N virtual channels;
aligning and reassembling, according to the alignment marker code blocks, code block sequences that undergo code block distribution on the (M+N) virtual channels, to obtain m×t2 data code blocks and n×t2 FEC check code blocks, where m×t2 is less than or equal to m_max, m_max is t1 times the value of M, n is less than or equal to n_max, n_max is t1 times the value of N, and t1 and t2 are positive integers; and
discarding the alignment marker code blocks after completing the alignment and reassembly by using the alignment marker code blocks.

With reference to the sixth aspect, in a third possible implementation manner of the sixth aspect, the processor further performs the following steps:
extracting, according to geared speed bit by bit demultiplexing, M data code block streams from the data sent through the at most H interfaces, and extracting, according to the geared speed bit by bit demultiplexing, N FEC check code block streams from the data sent through the at most K interfaces, where M is an integral multiple of H, the M data code block streams correspond to M virtual channels of a first virtual channel group, N is an integral multiple of K, and the N data code block streams correspond to N virtual channels of a second virtual channel group;
searching for alignment marker code blocks inserted into code block streams that are formed by the data code block streams on the M virtual channels and FEC check code blocks on the N virtual channels;
aligning and reassembling, according to the alignment marker code blocks, the code block streams on the (M+N) virtual channels, to obtain m×t2 data code blocks, n×t2 FEC check code blocks, and i idle code blocks, where m×t2 is less than or equal to m_max, m_max is t1 times the value of M, n×t2 is less than n_max, n_max is t1 times the value of N, t1 and t2 are positive integers, and i equals n_max minus n; and
discarding the alignment marker code blocks and the i idle code blocks after completing the alignment and reassembly by using the alignment marker code blocks.

With reference to the second possible or third possible implementation manner of the sixth aspect, in a fourth possible implementation manner of the sixth aspect, the processor further performs the following steps:
correcting, at an FEC coding processing sublayer, a bit error in the m×t2 data code blocks by using the n×t2 FEC check code blocks; and
discarding the n×t2 FEC check code blocks after completing the correcting a bit error, and inputting m×t2 data code blocks that are obtained after correcting the bit error to a physical coding sublayer.

With reference to the second possible or third possible implementation manner of the sixth aspect, in a fifth possible implementation manner of the sixth aspect, the processor further performs the following step:
after acquiring the n×t2 FEC check code blocks by alignment and reassembly, discarding the n×t2 FEC check code blocks, and inputting the m×t2 data code blocks to a physical coding sublayer.

It can be seen from the foregoing technical solutions that the embodiments of the present invention have the following advantages:
In the embodiments of the present invention, at an FEC coding processing sublayer, FEC coding is performed on a data code block sequence by using m data code blocks as one group, to generate n FEC check code blocks; then the data code blocks and the FEC check code blocks are respectively distributed to a first virtual channel group and a second virtual channel group; and then, according to geared speed bit by bit multiplexing, data distributed to the first virtual channel group and data distributed to the second virtual channel group are respectively multiplexed to interfaces of a first physical channel group and interfaces of the second virtual channel group. Because the n FEC check code blocks are first distributed to N virtual channels of the second virtual channel group, and then output to extra K interfaces of a second physical channel group through the N virtual channels after the geared speed bit by bit multiplexing, data transmission bandwidth of a system is not reduced. Because the data code blocks and the FEC check code blocks are respectively transmitted to the first physical channel group and the second physical channel group, flexibility and compatibility requirements are well met, the system is compatible with physical transmission interfaces of different types and performance and ensure an interconnection capability between them, and the system may choose to transmit the FEC check code blocks or not to transmit the FEC check code blocks according to performance of a transmission interface.

### BRIEF DESCRIPTION OF DRAWINGS

FIG. 1 is a schematic block diagram of a process of an FEC coding data processing method according to an embodiment of the present invention;
FIG. 2 is a schematic block diagram of a process of another FEC decoding data processing method according to an embodiment of the present invention;
FIG. 3 is a schematic diagram of composition and a structure of an FEC coding data processing apparatus according to an embodiment of the present invention;
FIG. 4 is a schematic diagram of composition and a structure of another FEC decoding data processing apparatus according to an embodiment of the present invention;
FIG. 5 is a schematic diagram of composition and a structure of another FEC coding data processing apparatus according to an embodiment of the present invention; and
FIG. 6 is a schematic diagram of composition and a structure of another FEC decoding data processing apparatus according to an embodiment of the present invention.

### DESCRIPTION OF EMBODIMENTS

Embodiments of the present invention provide an FEC coding/decoding data processing method and a related apparatus, where FEC check overhead data is selectively transmitted and received through an extra channel without reducing actual available data transmission bandwidth of a system, which meet flexibility and compatibility requirements.

To make the invention objectives, features, and advantages of the present invention clearer and more comprehensible, the following clearly and completely describes the technical solutions in the embodiments of the present invention with reference to the accompanying drawings in the embodiments of the present invention. Apparently, the embodiments described in the following are merely a part rather than all of the embodiments of the present invention. All other embodiments obtained by a person skilled in the art based on the embodiments of the present invention shall fall within the protection scope of the present invention.

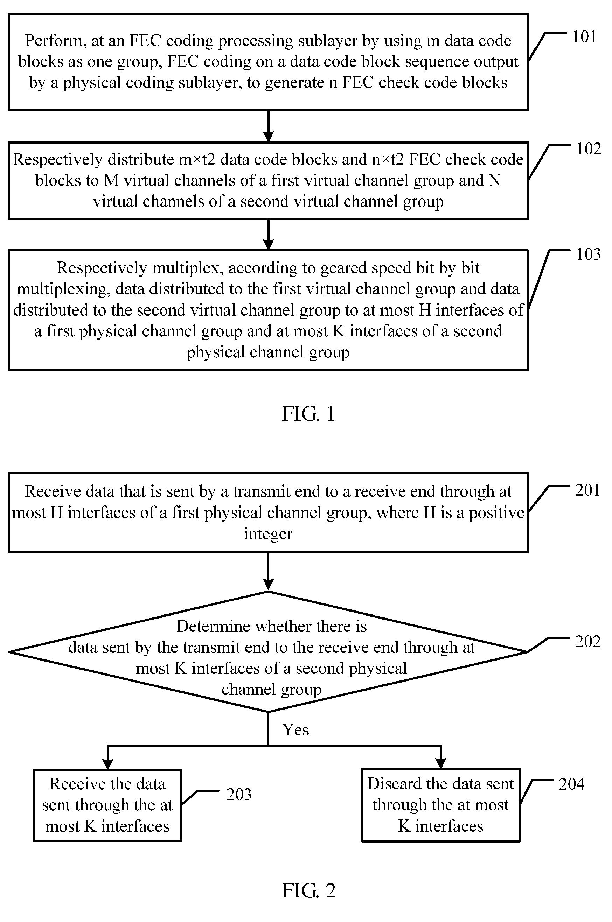

Referring to FIG. 1, an embodiment of an FEC coding data processing method provided by the present invention may specifically include the following steps:

101. Perform, at a forward error correction (FEC, Forward Error Correction) coding processing sublayer by using m data code blocks as one group, FEC coding on a data code block sequence output by a physical coding sublayer, to generate n FEC check code blocks.

In this embodiment of the present invention, after block coding is performed at the physical coding sublayer (PCS, Physical Coding Sub-layer), a data code block sequence is output, where the data code block sequence includes multiple data code blocks, the data code block refers to a code block that is input to the FEC coding processing sublayer, carries original information data, and is in a specific format, and carried original information is payload data on which the FEC coding is performed. The block coding performed on the PCS may specifically be 64/66b coding, or a coding manner with lower overhead, such as 256/(257+p)b and 512/(513+p)b, where P is a natural number, which is not limited by the present invention. The code block includes a block type indicator and (or) synchronization header information, for example, 64/66b coding includes synchronization header information of 2 bits, where the synchronization header is 01 or 10 and is further used to distinguish two different block types, which are a complete data block or a non complete data block. The data code block output after the block coding is performed may specifically be a data stream that meets an (8xc)/[(8xc)+d]b format, where both c and d are positive integers greater than or equal to 1, and when an interface of a physical channel is a high-speed Ethernet interface, for example, 400GE or higher, values of c and d may be designed and adjusted according to a system requirement, for example, a larger c is used to reduce overhead and improve coding efficiency.

In this embodiment of the present invention, data code blocks output from the PCS physical coding processing sublayer have a strict and determined order, namely, a data code block sequence. Successive m data code blocks are selected from the data code block sequence as one group for performing the FEC coding; by performing FEC calculation on data carried in these m data code blocks, FEC check overhead data can be generated. The FEC check overhead data is provided with a specific type indicator and (or) synchronization header information, and is encapsulated into n FEC check code blocks, where both m and n are positive integers, and values of m and n are related to an FEC coding manner selected by the FEC coding processing sublayer, which are not limited herein. In addition, for a process of the FEC coding, reference may be made to descriptions of the prior art, which is not further described herein.

It should be noted that, in this embodiment of the present invention, there may specifically be multiple data code blocks covered by an FEC coding frame of the FEC coding sublayer, and the number of the data code blocks is not limited and is represented by m in this embodiment of the present invention; the multiple data code blocks are all sent to the FEC coding processing sublayer for the FEC coding, to generate multiple FEC check code blocks, where the number of the FEC check code blocks is represented by n in this embodiment of the present invention.

It should be noted that, in this embodiment of the present invention, the FEC coding processing sublayer is responsible for performing the FEC calculation on the m code blocks to generate the n FEC check code blocks; a known explicit difference exists between a data code block and an FEC check code block at the FEC coding processing sublayer; and according to the known difference between the two types of code blocks, the FEC coding processing sublayer may specifically perform mutual data transmission with another module in a space-separated parallel transmission manner or in a time-separated serial transmission manner, which is not limited in this embodiment of the present invention. When performing mutual data transmission with the another module, the FEC coding processing sublayer needs to notify the another module of different indicators of block types. The FEC coding/decoding sublayer is independent of a physical medium attachment sublayer (PMA, Physical Medium Attachment), and the data code blocks and the FEC check code blocks need to be explicitly indicated and distinguished at an interface. According to a distinguishing indicator, as described below, the PMA separately distributes the data blocks and the check blocks to different virtual channels. When the space-separated manner is used, the data blocks and the check blocks are distinguished by using different separate interfaces; and when the time-separated serial manner is used, the data blocks and the check blocks are distinguished by using different time slices. No matter in the space-separated parallel manner or in the time-separated serial manner, an extra indication signal may further be added for distinguishing and indicating, for example, different code block header information is given to the FEC check blocks.

In addition, the data code blocks and the FEC check code blocks may be distinguished by using different synchronization headers. For example, synchronization headers used by the data code blocks are "0b10" and "0b01". Specifically, the synchronization header "0b10" indicates that a data code block includes a control character; and the synchronization header "0b01" indicates that a data code block does not include a control character, and characters in the data code block are all data characters in this case. Synchronization headers alternately used by the FEC check code blocks are "0b00" and "0b11". Specifically, the synchronization header "0b00" indicates an odd FEC check code block, and there is FEC check overhead data in the block; and the synchronization header "0b11" indicates an even FEC check code block, and there is FEC check overhead data in the block. In this working manner, synchronization headers of the data code blocks and the FEC check code blocks arranged at the FEC coding processing sublayer have FEC frame period regularity, and may be used to identify the data code blocks and the FEC check code blocks; and the synchronization headers may be used to direct block distribution downward, and direct identification of the data code blocks and the FEC check code blocks upward.

102. Respectively distribute m×t2 data code blocks and n×t2 FEC check code blocks to M virtual channels of a first virtual channel group and N virtual channels of a second virtual channel group.

m×t2 is less than or equal to m_max, m_max is t1 times the value of M, n×t2 is less than or equal to n_max, and n_max is t1 times the value of N, where t1 and t2 are positive integers.

In this embodiment of the present invention, multiple virtual channels are grouped into the first virtual channel group and the second virtual channel group, and the data code blocks and the FEC check code blocks are separately distributed to different virtual channel groups. The first virtual channel group includes M virtual channels, the second virtual channel group includes N virtual channels, where M meets the following relational expressions: M×t1=m_max and m_max>m×t2, where t1 and t2 are positive integers, that is, a positive integer multiple of M is greater than or equal to m, and a physical meaning is that: a transmission carrying capability provided by the number of virtual channels of the first virtual channel group is greater than or equal to a transmission carrying requirement of the data code blocks; similarly, N also meets the following relational expressions: N×t1=n_max and n_max≥n×t2, where t1 and t2 are positive integers, that is, a positive integer multiple of N is greater than or equal to n, and a physical meaning is that: a positive integer multiple of a transmission carrying capability provided by the number of virtual channels of the second virtual channel group is greater than or equal to a transmission carrying requirement of the FEC check code blocks. When n_max>n×t2 and m_max>m×t2, the foregoing integer relationship of data distribution is ensured by adding an idle code block. The number of added idle code blocks i_m =_m_max - m×t2, and i_n =_n_max - n×t2. In an actual application, i_m =_m_max - m×t2 = 0 may be set, and selection of an FEC code pattern (m, n) is matched by using i_n =_n_max - n×t2. In physical significance, idle code blocks are inserted into only an FEC overhead transmission channel as far as possible. The present invention does not limit that, but i_m =_m_max - m×t2 = m×t2 - m×t2 = 0 is used as an example in the following descriptions.

In this embodiment of the present invention, step 102 may be understood as the following two steps as well:
A1. Distribute the m data code blocks to M virtual channels of a first virtual channel group.
A2. Distribute the n FEC check code blocks to N virtual channels of a second virtual channel group.

There is no limitation on an order of performing step A1 and step A2. Step A1 may be first performed, and then step A2 is performed, or step A2 may be first performed, and then step A1 is performed, or steps A1 and A2 may be performed simultaneously, which is not limited in this embodiment of the present invention.

It should be noted that, after step 102 in this embodiment of the present invention is completed, the following step may further be included: periodically inserting alignment marker code blocks into code block streams carried on (M+N) virtual channels of the first virtual channel group and the second virtual channel group, where each alignment marker code block further marks a number of a virtual channel on which the alignment marker code block is located, and the alignment marker code block is used for a receive end to perform alignment, reassembly, and recovery on (M+N) code block streams after acquiring the code block streams of the (M+N) virtual channels. M virtual channels of the first virtual channel group and N virtual channels of the second virtual channel group are combined as the (M+N) virtual channels, and the code block streams carried on the (M+N) virtual channels include m data code blocks and n FEC check code blocks in each FEC frame. Alignment marker code blocks (Alignment Marker) are periodically inserted into the code block streams; after acquiring the code block streams, the receive end can perform alignment, reassembly, and recovery according to the alignment marker code blocks. In addition, the alignment marker code blocks may further be used to mark number information of the M virtual channels in which the alignment marker code blocks are located and number information of the N virtual channels in which the alignment marker code blocks are located.

In this embodiment of the present invention, the distributing the data code blocks to the first virtual channel group and distributing the FEC check code blocks to the second virtual channel group may specifically be implemented at the PMA sublayer, data distributed to the first virtual channel group and data distributed to the second virtual channel group are processed according to the following step 103, and reference may be made to the following descriptions.

103. Respectively multiplex, according to geared speed bit by bit multiplexing, data distributed to the first virtual channel group and data distributed to the second virtual channel group to at most H interfaces of a first physical channel group and at most K interfaces of a second physical channel group.

M is an integral multiple of H, and N is an integral multiple of K.

In step 103 described herein, the data distributed to the first virtual channel group refers to the m data code blocks and may further include a necessary idle code block in some embodiments of the present invention; and the data distributed to the second virtual channel group refers to the n FEC check code blocks and may further include a necessary idle code block in some embodiments of the present invention.

In this embodiment of the present invention, step 103 may be understood as the following two steps as well:
B1. Multiplex, according to geared speed bit by bit multiplexing, M data bit streams that are distributed to the first virtual channel group to at most H interfaces of a first physical channel group.
B2. Multiplex, according to the geared speed bit by bit multiplexing, N data bit streams that are distributed to the second virtual channel group to at most K interfaces of a second physical channel group.

There is no limitation on an order of performing step B1 and step B2. Step B1 may be first performed, and then step B2 is performed, or step B2 may be first performed, and then step B1 is performed, or steps B1 and B2 may be performed simultaneously, which is not limited in this embodiment of the present invention.

It should be noted that, for steps B1 and B2, by using step B1 as an example, the M data bit streams are multiplexed from the first virtual channel group to the at most H interfaces of the first physical channel group according to the geared speed bit by bit multiplexing. Specifically, performing geared speed bit by bit multiplexing on the M data bit streams may be simultaneously multiplexing the M data bit streams to the at most H interfaces, where M is an integral multiple of H, the M data bit streams may be multiplexed to the H interfaces of the first physical channel group, or may be multiplexed to specific H1 and H2, which are less than H, interfaces of the first physical channel group. For the case of less than H interfaces, specific H1 electrical interfaces and H2 optical interfaces are used as an example for descriptions. In addition, in this embodiment of the present invention, the geared speed bit by bit multiplexing refers to a multiplexing manner of multiplexing an input data bit stream and then outputting a multiplexed data bit stream; for example, there are 4 input data bit streams, and if a variable-rate ratio is 4:3, 3 data bit streams may be output.

In this embodiment of the present invention, interfaces of a physical channel group may specifically be an electrical interface and an optical interface; an optical module connects the electrical interface and the optical interface, and the optical module is configured to implement optical-to-electrical conversion and electrical-to-optical conversion. Specifically, the at most H interfaces of the first physical channel group may specifically be H1 electrical interfaces and H2 optical interfaces, and the at most K interfaces of the second physical channel group may specifically be K1 electrical interfaces and K2 optical interfaces, that is, the first physical channel group includes H1 electrical interfaces and H2 optical interfaces, and the second physical channel group includes K1 electrical interfaces and K2 optical interfaces. Herein, H is a (least) common multiple of H1 and H2, and K is a (least) common multiple of K1 and K2.

Specifically, in this embodiment of the present invention, in step 103, the respectively multiplexing, according to geared speed bit by bit multiplexing, data distributed to the first virtual channel group and data distributed to the second virtual channel group to at most H interfaces of a first physical channel group and at most K interfaces of a second physical channel group may include the following steps:
C1. Respectively multiplex, according to the geared speed bit by bit multiplexing, the data distributed to the first virtual channel group and the data distributed to the second virtual channel group to H1 electrical interfaces of the first physical channel group and K1 electrical interfaces of the second physical channel group, where M is an integral multiple of H1, and N is an integral multiple of K1.
C2. After separately performing multiplexing, mapping, and modulation on all data multiplexed to the H1 electrical interfaces and all data multiplexed to the K1 electrical interfaces, send the data respectively to H2 optical interfaces and K2 optical interfaces, where M is an integral multiple of H2, and N is an integral multiple of K2.

By performing step C1, the data code blocks and the FEC check code blocks are respectively multiplexed to the electrical interfaces of the first physical channel group and the electrical interfaces of the second physical channel group; and by performing step C2, after multiplexing, mapping, and modulation are performed on all data on the electrical interfaces of the first physical channel group, the data is sent to the optical interfaces of the first physical channel group, and after multiplexing, mapping, and modulation are performed on all data on the electrical interfaces of the second physical channel group, the data is sent to the optical interfaces of the second physical channel group. Specifically, in step C2, the optical module that connects the electrical interface and the optical interface may be configured to implement electrical-to-optical conversion; and a process of the electrical-to-optical conversion is not further described herein.

In the foregoing step C1 and C2, the data code blocks and the FEC check code blocks are first multiplexed to electrical interfaces of the physical channel groups; and then, multiplexing, mapping, and modulation are performed by the optical module on data on the electrical interfaces of the physical channel group, and the data is input to optical interfaces. In this embodiment of the present invention, as a transmission rate of a physical channel continually increases, and as transmission rates of an electrical interface and an optical interface continually increase, the geared speed bit by bit multiplexing provided by this embodiment of the present invention is compatible with continuous evolution of a physical channel interface technology. For example, for the high-speed Ethernet interface whose transmission rate continually increases, the method provided by this embodiment of the present invention can be used to perform geared speed bit by bit multiplexing.

It should be noted that, in this embodiment of the present invention, the first virtual channel group and the second virtual channel group described in step 102 both refer to multiple virtual channels that are grouped into two different groups, which is a naming manner used only for distinguishing the first virtual channel group and the second virtual channel group which are multiple virtual channels grouped into different groups. The "first" and the "second" have no relationship in terms of timing sequence or logic, which is only for descriptions herein; and distinguishing the first physical channel group and the second physical channel group is also applicable to the descriptions about the "first" and the "second" herein. In this embodiment of the present invention, space division is performed on interfaces of the physical channel groups that are separately used by the data code blocks and the FEC check code blocks, and the interfaces are grouped into two interface subgroups, so that, when transmitting the data code blocks and the FEC check code blocks, a transmit end device may make a choice according to a design requirement of a physical channel, choosing whether to transmit the FEC check code blocks, and choosing to use an optical module with or without an FEC transmission channel; and when receiving a physical signal of data with or without FEC coding overhead, a receive end device may choose to use an optical module with an FEC overhead receiving channel or an optical module without an FEC overhead signal receiving optical channel to receive the signal and perform optical-to-electrical conversion on the signal, and may further choose whether to correct a possible data bit error by using the acquired FEC coding overhead, which improves design flexibility of a system. Therefore, a device without an FEC coding function can perform system interconnection with a device with an FEC coding function by using a correct module, thereby improving an interconnecting capability and compatibility of device interfaces.

It should be noted that, after the data distributed to the first virtual channel group is multiplexed to the at most H interfaces of the first physical channel group, and the data distributed to the second virtual channel group is multiplexed to the at most K interfaces of the second physical channel group, this embodiment of the present invention may further include the following step:
Discard all data multiplexed to the at most K interfaces, and transmit all data multiplexed to the at most H interfaces to the receive end through a physical transmission medium. Specifically, an optical module without an FEC coding overhead transmission channel transmits only data that is multiplexed, mapped, and modulated to a valid data transmission optical channel.

That is, in this embodiment of the present invention, space-division distribution is performed on the FEC check code blocks and the data code blocks, and the FEC check code blocks and the data code blocks are separately multiplexed to interfaces of different physical channel groups; and target-distance transmission is performed on only data on the H interfaces of the first physical channel group through a physical transmission medium, but data on the K interfaces of the second physical channel group is not transmitted, which is applicable to a case in which transmission performance is good; in this case, only the data code blocks are transmitted, because there are few bit errors in the data code blocks, FEC error correction does not need to be performed, and therefore the FEC check code blocks may be ignored. In addition, in this implementation manner, whether to transmit the FEC check code blocks to the receive end may further be determined by whether a device has enabled or disabled an FEC coding function, or whether a device has an FEC coding function or not. For a device that has disabled the FEC function or does not have the FEC coding function, no FEC check code block is generated, equivalently the device ignores all the FEC check code blocks, and only the data code blocks are sent to the receive end by using the at most H interfaces of the first physical channel group; and in a receiving direction, because the receive end receives no FEC check code block, but receives only the data code blocks, FEC decoding does not need to be performed. Therefore, this embodiment of the present invention is compatible with interconnection of multiple systems, thereby improving an interconnecting capability and compatibility of device interfaces. However, in the prior art, a device that is used to transmit the FEC check overhead data can only be interconnected with a device with an FEC function, but cannot communicate with a device without an FEC function, so that data cannot be transmitted between systems. Therefore, the FEC coding data processing method provided by this embodiment of the present invention is compatible with both the device with the FEC function and the device without the FEC function, which meets compatibility and flexibility requirements of FEC use in a system especially a multichannel communications system.

It should be noted that, after the data distributed to the first virtual channel group is multiplexed to the at most H interfaces of the first physical channel group, and the data distributed to the second virtual channel group is multiplexed to the at most K interfaces of the second physical channel group, this embodiment of the present invention may further include the following step:
Transmit all data multiplexed to the at most H interfaces and all data multiplexed to the at most K interfaces to the receive end through a physical transmission medium.

That is, in the embodiment described herein, space-division distribution is performed on the FEC check code blocks and the data code blocks, and the FEC check code blocks and the data code blocks are separately multiplexed to interfaces of different physical channel groups; and then target-distance transmission is performed on the data code blocks and the FEC check code blocks through a physical transmission medium at the same time. For a device that needs to improve transmission performance by using an FEC coding/decoding function, both the FEC check code blocks and the data code blocks need to be transmitted, and therefore, the FEC check code blocks may be used, at the receive end, to correct a bit error that occurs in a correctable data code block after the transmission, so as to recover an original data code block.

It should be noted that, in this embodiment of the present invention, after the FEC coding is performed on the m data code blocks to generate the n FEC check code blocks, in order to match a proportion of FEC check overhead and a ratio relationship of virtual channels to actual transmission channels in the first and second channel groups, besides generating the FEC check code blocks, the following steps may further be included: generating i idle code blocks, where the idle code block includes a determined idle information bit pattern that is known by the transmit end and the receive end, N×t1=n_max, n_max≥n×t2, t1 and t2 are positive integers and are determined by m, M, and H, and i equals n_max minus n×t2; and distributing the idle code blocks and the FEC check code blocks to the N virtual channels of the second virtual channel group, that is, data described in step 103 that is distributed to the second virtual channel group and is represented as data bit streams corresponding to the N virtual channels includes the FEC check code blocks and the idle code blocks. The N data bit streams are all multiplexed to the at most K interfaces of the second physical channel according to the geared speed bit by bit multiplexing. For example, the first virtual channel group includes M = 80 virtual channels in total, the first physical channel group includes 8 physical interfaces, the second virtual channel group includes 10 virtual channels in total, the second physical channel group includes one physical interface, and the FEC coding involves m = 160 and n = 19, which means that, within one FEC frame period, 160 data code blocks need to be distributed to M = 80 virtual channels, and 19 data code blocks need to be distributed to N = 10 virtual channels. According to an equal-rate design of physical channels, one idle code block needs to be inserted. From m_max = M×t1, t1 = 2 is obtained; and from n_max = 10×t1 = 20, i = n_max - n = 20 - 19 = 1. For another example, the first virtual channel group includes M = 80 virtual channels in total, the first physical channel group includes 16 physical interfaces, the second virtual channel group includes 10 virtual channels in total, the second physical channel group includes two physical interfaces, and the FEC coding involves m = 160 and n = 10, which means that, within one FEC frame period, 160 data code blocks need to be distributed to M = 80 virtual channels, and 10 data code blocks need to be distributed to N = 10 virtual channels. According to an equal-rate design of physical channels, 10 idle code blocks need to be inserted. From m_max = M×t1, t1 = 2; and from n_max = 10×t1 = 20, i = n_max - n = 20 - 10 = 10. In the two physical interfaces of the second physical channel group, one interface is configured to transmit the FEC check code blocks, and the other interface is configured to transmit an idle code block. A bit pattern added in the idle code block is a determined bit pattern format that is known by both the transmit end and the receive end. In the idle code block, there is no meaningful information, and from a perspective of information transmission, the amount of information is 0, that is, no information is included. Specifically, a meaningless sequence may be added in the generated idle code block, such as: 0b1010...1010.

It should be noted that, the FEC check code blocks and the idle code blocks may be indicated and distinguished by using different synchronization headers. For example, a synchronization header used by an FEC check code block is "0b01", and a synchronization header used in an idle code block is "0b10"; the synchronization header "0b01" represents an FEC check code block, and there is FEC check overhead data in the block; and the synchronization header "0b10" represents an idle code block, and there are idle information bits in the block.

When the data distributed to the second virtual channel group includes the FEC check code blocks and the idle code blocks, the multiplexing, according to the geared speed bit by bit multiplexing, the data distributed to the second virtual channel to interfaces of the second physical channel may specifically include the following steps:
Discard the i idle code blocks in all data multiplexed to the at most K interfaces, and transmit all data multiplexed to the at most H interfaces and the n FEC check code blocks in all the data multiplexed to the at most K interfaces to the receive end through a physical transmission medium. For example, the first virtual channel group includes M = 80 virtual channels in total, the first physical channel group includes 16 physical interfaces, the second virtual channel group includes 10 virtual channels in total, the second physical channel group includes two physical interfaces, and the FEC coding involves m = 160 and n = 10, which means that, within one FEC frame period, 160 data code blocks need to be distributed to M = 80 virtual channels, and 10 data code blocks need to be distributed to N = 10 virtual channels. According to an equal-rate design of physical channels, 10 idle code blocks need to be inserted. From m_max = M×t1, t1 = 2; and from n_max = 10×t1 = 20, i = n_max - n = 20 - 10 = 10. In the two physical interfaces of the second physical channel group, one interface is configured to transmit the FEC check code blocks; and the other interface is configured to transmit an idle code block, and herein the inserted idle code blocks are discarded.

In this embodiment of the present invention, at an FEC coding processing sublayer, FEC coding is performed on m data code blocks to generate n FEC check code blocks; then the data code blocks and the FEC check code blocks are respectively distributed to a first virtual channel group and a second virtual channel group; and then, according to geared speed bit by bit multiplexing, data distributed to the first virtual channel group and data distributed to the second virtual channel group are respectively multiplexed to interfaces of a first physical channel group and interfaces of the second virtual channel group. Because the n check code blocks are first distributed to N virtual channels of the second virtual channel group, and then output to K interfaces of a second physical channel group through the N virtual channels after the geared speed bit by bit multiplexing, the FEC check code blocks use an extra space-separated transmission channel, which implements transmission separate from and independent of data, and in this embodiment of the present invention, FEC is allowed to be performed on a data code block stream before distribution, which is applicable to an occasion with a low-latency requirement.

In the foregoing embodiment, an FEC coding data processing method provided by an embodiment of the present invention is introduced. In the following, an actual application example is further used to describe the method provided by the foregoing embodiment of the present invention.

Most Ethernet interface systems of ultra 100 G continuously use a multichannel architecture; from 8/10b coding that is used by the Ethernet in GE in the early days, to 64/66b coding used in 10GE, 40GE, and 100GE, as well as 64/66b coding and 256/257b and 512/514b transcoding of the 64/66b coding that are used in the second generation 100GE for being compatible with the 64/66b coding, a development direction trend of the Ethernet is to use an Ethernet physical layer block coding manner that is more suitable, flexible, and low-overhead. For example, coding, such as 512/514b, 400/403b, 400/404b, and (8xc)/[(8xc)+d]b, is used, where c>=1, d>=1, and c and d are value-suitable positive integers and natural numbers. In this embodiment of the present invention, the FEC coding data processing method is described based on the flexible (8xc)/[(8xc)+d]b block coding.

By using a 400GE Ethernet interface as an example for descriptions in the following, after block coding is performed on media independent interface (MII, Media Independent Inteface) information, an (8xc)/[(8xc)+d]b data code block sequence is output and sent to an FEC coding processing sublayer downward; A (8xc)/[(8xc)+d]b data code blocks are fetched from the FEC coding processing sublayer as selected FEC coding payload data; after FEC calculation is performed on some or all of the fetched A (8xc)/[(8xc)+d]b data code blocks, for example, B data code blocks, FEC check overhead data is generated; and the FEC check overhead data is encapsulated into C FEC check code blocks in an (8xc)/[(8xc)+d]b format, where A, B, and C are all natural numbers. There are periodic determined differences between the data code blocks and the FEC check code blocks at the FEC coding processing sublayer, which may specifically be two parallel code streams or may be one serial code stream, which is not limited herein.

After the C FEC check code blocks are generated, firstly, the A (8xc)/[(8xc)+d]b data code blocks are distributed to X_virtual virtual channels of a first virtual channel group by using a code block granule as unit, and the C FEC check code blocks of the (8xc)/[(8xc)+d]b format are distributed to Y_virtual virtual channels of a second virtual channel group by using a code block granule as unit, where A is less than or equal to an integral multiple of X_virtual, and C is less than or equal to an integral multiple of Y_virtual.

Secondly, in code block streams carried on (X_virtual+Y_virtual) virtual channels of the first virtual channel group and the second virtual channel group, (X_virtual+Y_virtual) alignment marker code blocks are inserted periodically; for example, one alignment marker code block is inserted into each virtual channel by using 65536 or 16384 code blocks as a period. The marker code blocks are further used to mark number information of virtual channels in which all code blocks are located; for example, X_vk and Y_vk are respectively used to represent number information of the first virtual channel group and the second virtual channel group, that is, X_vk = 0, 1, 2, ..., X_virtual - 1 and Y_vk = 0, 1, 2, ..., Y_virtual - 1.

Then, geared speed bit by bit multiplexing is separately performed on data distributed to the first virtual channel group and data distributed to the second virtual channel group, that is, bit acceleration multiplexing is separately performed on the A data code blocks and the C FEC check code blocks; the A data code blocks are multiplexed to X_physical interfaces of a first physical channel group, and the C FEC check code blocks are multiplexed to Y_physical interfaces of a second physical channel group; and when there is an idle code block generated, the C FEC check code blocks and D idle code blocks are multiplexed to the Y_physical interfaces of the second physical channel group, where X_virtual is an integral multiple of X_physical, and Y_virtual is an integral multiple of Y_physical.

Finally, data on the physical channel groups is transmitted to a receive end through a physical transmission medium. During specific transmission, a transmit end may use the following three implementation manners:
1. Only all data multiplexed to the X_physical interfaces is transmitted, that is, only the data code blocks are transmitted, and all data on the Y_physical interfaces is discarded.
2. All data multiplexed to the X_physical interfaces and all data multiplexed to the Y_physical interfaces are transmitted to the receive end; and all the data multiplexed to the Y_physical interfaces includes two cases: one is that the data is the C FEC check code blocks, and the other is that the data is the C FEC check code blocks and the D idle code blocks.
3. When the D idle code blocks are also multiplexed to the Y_physical interfaces, the D idle code blocks in all the data multiplexed to the Y_physical interfaces are discarded, and only the D idle code blocks in all the data multiplexed to the Y_physical interfaces and all the data multiplexed to the X_physical interfaces are transmitted.

For the 400GE, a 25G to 28 G electrical/optical interface of a physical channel may be used, and 16 electrical/optical interfaces of this type are required. As an example, herein one to two 25G to 28G electrical/optical interfaces are used as a transmission channel of the FEC check code blocks, so as to provide 12.5 to 25% of an FEC overhead carrying capability. As shown in the following Table 1, Table 1 is an interface use condition of multiplexed physical channels when different virtual channels are used. In the following Table 1, virtual channels 16+2 and 80+10 are used as examples.

| A | 8×n | 16×n | | 32×n | | 80×n | | |
|---|---|---|---|---|---|---|---|---|
| B | 8×n-j | 16×n-j | | 32×n-j | | 80×n-j | | |
| C | 1×n | 2×n | | 4×n | | 10×n | | |
| X_virtual | 8 ch | 16 ch | | 32 ch | | 80 ch | | |
| | 25G | 25G | | 12.5G | | 5G | | |
| Y_virtual | 1 ch | 2 ch | | 4 ch | | 10 ch | | |
| | 25G | 25G | | 12.5G | | 5G | | |
| X_physical | 8 ch | 8 ch | 16 ch | 8 ch | 16 ch | 40 ch | 16 ch | 8 ch |
| | 50G | 50G | 25G | 50G | 25G | 10G | 25G | 50G |
| Y_ physical | 1 ch | 1 ch | 2 ch | 1 ch | 2 ch | 5 ch | 2 ch | 1 ch |
| | 50G | 50G | 25G | 50G | 50G | 10G | 25G | 50G |

In an actual application, a physical channel transmission rate increases with the development of technologies; an electrical interface develops from 2.5G to 10 to 11G, and at present evolves into 25 to 28G, and the next rate may be 50 to 56G or 40 to 43G. An optical interface rate often increases before an electrical interface rate increases; a single-wavelength optical interface is already more than 50G or 100G. A rate level of an electrical/optical interface of a physical channel inevitably upgrades and evolves with the development of technologies. A determined architecture that is compatible with evolution of a physical interface is often expected.

As shown in the foregoing Table 1, physical channels 16+2 mean that 16 interfaces are configured to transmit the data code blocks and the other 2 interfaces may transmit the FEC check code blocks; the physical channels 16+2 may be compatible with electrical/optical interfaces of 25 to 28G and 50 to 56G at the same time to ensure smooth evolution; and physical channels 80+10 may be compatible with electrical/optical interfaces of 10 to 11G, 25 to 28G and 50 to 56G to ensure smooth evolution. The system only needs to be designed with a suitable number of virtual channels; X_virtual (Y_virtual) is the least common multiple or a common multiple of the number of compatible physical electrical/optical interface channels X_physical (Y_physical); and in engineering design, the least common multiple is the most suitable. Bit acceleration multiplexing is further performed on data on a virtual channel to multiplex the data to a higher-rate interface, or to a bit multiplexing output rate of an electrical/optical interface into which the bit acceleration multiplexing evolves.

For example, in the foregoing table, 80 is the least common multiple of 40, 16, and 8, and 10 is the least common multiple of 5, 2, and 1. 16 is the least common multiple of 16 and 8, and 32 is a common multiple of 16 and 8. In an architecture of 80+10 virtual channels, a system chip may be compatible and adaptive with an optical module including a 10 to 11G electrical interface and a 25 to 28G optical interface: firstly, geared speed bit by bit multiplexing is performed to output the data to the 10 to 11G electrical interface, and then the electrical interface of the optical module is interconnected, and inside the optical module, a 25 to 28G electrical/optical interface rate is obtained by performing bit acceleration multiplexing of 5:2; or the system chip may be compatible and adaptive with an optical module including a 10 to 11G electrical interface and a 50 to 56G optical interface, and inside the optical module, a 50 to 56G electrical/optical interface rate is obtained by performing bit acceleration multiplexing of 5:1. At present, the system chip may be compatible and adaptive with an optical module including a 25 to 28G electrical interface and a 50 to 56G optical interface; after the 25 to 28G electrical interface is interconnected to the optical module, the system performs, inside the optical module, 2:5 bit deceleration multiplexing to obtain a 10 to 11G optical interface rate; or, inside the optical module, 2:1 bit acceleration multiplexing is performed to obtain a 50 to 56G optical interface rate, which may specifically be selected in an actual application, and descriptions herein are just examples, and set no limitation.

In particular, as shown in the following Table 2, when virtual channels 80+10 are used, multiplexed physical channels need to be compatible with 40G electrical and optical interfaces, by inserting idle code blocks, the FEC check code blocks are distributed to only 8 channels of the 10 extra channels, and data of the idle code blocks inserted into 2 virtual channels is discarded. Finally, a data interface is a 10-channel 40G interface, and a data capacity is 400G; and an FEC check overhead interface is a one-channel 40G interface, and a capacity is 40G. A ratio of the data capacity to the FEC check overhead capacity is 400:40. According to this type of design, on the basis of being compatible with 10G, 25G, and 50G electrical/optical interfaces, the system may further be compatible with 20G and 40G optical interfaces or electrical interfaces.

| | | |
|---|---|---|
| A | 80×n | |
| B | 80×n-j | |
| C | (8+2)×n | |
| X_virtual | 80 ch | |
| | 5G | |
| Y_virtual | (8+2) ch | |
| | 5G | |
| X_physical | 20 ch | 10 ch |
| | 20G | 40G |
| Y_ physical | 2 ch | 1 ch |
| | 20G | 40G |

As shown in the foregoing Table 2, if a system architecture design further expects to be compatible with a 40G (20G) physical interface, that is, 10 40G (20 20G) optical channels are used to transmit 400GE data, and expects to use only one 40G channel (two 20G channels) to transmit FEC overhead data. A transmission capability of physical channels is determined, and the ratio of the data capacity to the FEC check overhead capacity is 400:40. On the basis that compatibility with a source data block transmission channel is ensured, in order to control and limit the overhead ratio (400:40), some adjustments need to be done in the architecture for carrying and transmission of the FEC check code blocks on a 40G-capacity FEC overhead transmission channel. For example, only one physical channel, that is, a 40G-rate optical interface, is used to transmit 40G-capacity FEC overhead. In a code block stream, a ratio of data code blocks to FEC check code blocks is 400:40 = 80:8, that is, a system of 80+10 virtual channels described above. When the PMA sublayer performs distribution, 10 virtual channels are generated, where no valid FEC coding overhead information is transmitted on two FEC overhead virtual channels, but idle code blocks are sent on the two FEC overhead virtual channels, for example, idle information bits added in an (8xc)/(8xc+d)b code block, and there is a meaningless sequence, such as "0b1010...1010", in the idle code block.

In this compatible architecture, if the physical channels are optical interfaces of 25 to 28G and 50 to 56G, when a transmission carrying capacity of an optical module is 400G:50G = 80:10, the optical module transmits all the FEC check code blocks and idle code blocks. If the physical channels are 40G optical interfaces, when a transmission carrying capacity of an optical module is 400G:40G = 80:8, the optical module transmits only the FEC check code blocks, and may discard the idle code blocks.

Marking and distinguishing an idle code block may be distinguished by using a virtual channel to which the idle code block is distributed an alignment control code block that is inserted into the virtual channel and is marked with a virtual channel number, or may be distinguished by a different code block synchronization header or code block type. For example, virtual channels to which the idle code blocks are distributed are the 89^{th} and 90^{th} virtual channels in the 80+10 virtual channels; in a multiplexing process, when 8:1 multiplexing is performed, idle code blocks that are distributed to the two virtual channels are directly discarded. Certainly, different code block synchronization headers and different code block types under indication of a same code block synchronization header may also be used for distinguishing and marking. Therefore, a receive chip conveniently performs distinguishing and processing. In addition, in this embodiment of the present invention, 1-bit indication information may further be added to indicate and distinguish a data code block and an FEC check code block in a code block stream between the FEC coding processing sublayer and the PMA sublayer.

It should be noted that, in this embodiment of the present invention, for an optical interface of a physical channel, for example, an optical interface that uses the NRZ code pattern and is applied in a scenario of a 10km or 40km distance, FEC coding/decoding may not be required. In this case, a physical channel of the FEC check code blocks is not disposed in the optical module, and all the data multiplexed to the interfaces of the second physical channel group is discarded, that is, all the FEC check code blocks are ignored, and only all the data on the interfaces of the first physical channel group is transmitted. Therefore, the system is compatible with an optical module without an FEC coding overhead transmission channel and a device that allows enabling or disabling an FEC coding/decoding function or does not have a coding/decoding function, and allows interconnection between the system and another system.

In this embodiment of the present invention, at an FEC coding processing sublayer, FEC coding is performed on data code blocks to generate FEC check code blocks; then the data code blocks and the FEC check code blocks are respectively distributed to a first virtual channel group and a second virtual channel group; and then, according to geared speed bit by bit multiplexing, data distributed to the first virtual channel group and data distributed to the second virtual channel group are respectively multiplexed to interfaces of a first physical channel group and interfaces of the second virtual channel group. Because the FEC check code blocks are first distributed to N virtual channels of the second virtual channel group, then undergo the geared speed bit by bit multiplexing by using the N virtual channels, and are output to extra K interfaces of a second physical channel group that are different from data transmission channels. Therefore, the FEC check code blocks do not occupy transmission bandwidth of original data. In addition, in this embodiment of the present invention, FEC coding/decoding is allowed to be performed on a 400G data stream before data distribution; compared with FEC coding/decoding performed on a virtual channel after distribution, for example, in the case of the foregoing 80+10 virtual channels, a latency is reduced by 1/80, which is applicable to an occasion with a low-latency requirement.

The foregoing embodiment introduces an FEC coding data processing method implemented on a transmit end. In the following, an FEC decoding data processing method implemented on a receive end is described. Referring to FIG. 2, the method may specifically include the following steps:
201. Receive data that is sent by a transmit end to a receive end through at most H interfaces of a first physical channel group, where H is a positive integer.

The transmit end performs target-distance transmission on the data sent through the at most H interfaces of the first physical channel group to the receive end through a physical transmission medium; and on the receive end, the data sent through the at most H interfaces of the first physical channel group may be received from the transmit end side.

202. Determine whether there is data sent by the transmit end to the receive end through at most K interfaces of a second physical channel group.

In this embodiment of the present invention, physical channels in both the transmit end and the receive end are grouped into two groups, which are the first physical channel group and the second physical channel group; and the receive end may receive data separately from the first physical channel group and the second physical channel group according to different division of the physical channels.

By determining whether there is data transmitted through the at most K interfaces of the second physical channel group, the receive end can learn whether there is data sent by the transmit end through the at most K interfaces. If the receive end learns that there is no data transmitted through the at most K interfaces of the second physical channel group, it indicates that the transmit end transmits data only through the at most H interfaces of the first physical channel group, and data on the at most K interfaces of the second physical channel group is discarded, instead of being transmitted. If the receive end learns that there is data transmitted through the at most K interfaces of the second physical channel group, it indicates that the transmit end transmits data through the at most H interfaces of the first physical channel group and performs data transmission through the at most K interfaces of the second physical channel group; when there is data transmitted through the at most K interfaces of the second physical channel group, the receive end may flexibly choose whether to receive the data sent by the at most K interfaces, that is, the receive end may perform step 203 or 204, which is not limited by the present invention herein.

203. If there is data sent by the transmit end through the at most K interfaces of the second physical channel group, receive the data sent through the at most K interfaces.

Alternatively, 204. If there is data sent by the transmit end through the at most K interfaces of the second physical channel group, discard the data sent through the at most K interfaces.

In this embodiment of the present invention, if step 204 is performed, for the receive end, only the data sent through the at most H interfaces of the first physical channel group is received, and this embodiment of the present invention may further include the following steps:
D1. Extract, according to geared speed bit by bit demultiplexing, M data code block streams from the data sent through the at most H interfaces, where M is an integral multiple of H, and the M data code block streams correspond to M virtual channels of a first virtual channel group.
D2. Search for alignment marker code blocks inserted into the data code block streams on the M virtual channels.
D3. Align and reassemble, according to the alignment marker code blocks, code block sequences that undergo code block distribution on the M virtual channels, to obtain m×t2 data code blocks, where m×t2 is less than or equal to m_max = M×t1, m_max is t1 times the value of M, and t1 and t2 are positive integers.
D4. Discard the alignment marker code blocks after completing the alignment and reassembly by using the alignment marker code blocks.
D5. Input the m×t2 data code blocks to a physical coding sublayer.

In steps D1 to D5, because the receive end receives only the data sent through the at most H interfaces of the first physical channel group, only the data sent through the at most H interfaces of the first physical channel group needs to be processed, a manner of the geared speed bit by bit demultiplexing in step D1 is a technological means inverse to the geared speed bit by bit multiplexing performed by the transmit end in the foregoing embodiment. After the alignment marker code blocks are searched out, the alignment marker code blocks are used to align and reassemble the code block sequences that undergo code block distribution on the M virtual channels, to obtain m×t2 data code blocks; and the alignment marker code blocks are discarded, and the m×t2 data code blocks are input to the physical coding sublayer. In addition, in this embodiment of the present invention, the geared speed bit by bit demultiplexing refers to a demultiplexing manner of demultiplexing an input data bit stream and then outputting a demultiplexed data bit stream; for example, there are 3 input data bit streams, and if a variable-rate ratio is 3:4, 4 data bit streams may be output after the demultiplexing.

In this embodiment of the present invention, if step 203 is performed, for the receive end, the data sent through the at most H interfaces of the first physical channel group and the data sent through the at most K interfaces of the second physical channel group are received, and this embodiment of the present invention may further include the following steps:
E1. Extract, according to geared speed bit by bit demultiplexing, M data code block streams from the data sent through the at most H interfaces, and extract, according to the geared speed bit by bit demultiplexing, N FEC check code block streams from the data sent through the at most K interfaces, where M is an integral multiple of H, the M data code block streams correspond to M virtual channels of a first virtual channel group, N is an integral multiple of K, and the N data code block streams correspond to N virtual channels of a second virtual channel group.
E2. Search for alignment marker code blocks inserted into (M+N) code block streams that are formed by the data code block streams on the M virtual channels and FEC check code blocks on the N virtual channels.
E3. Align and reassemble, according to the alignment marker code blocks, code block sequences that undergo code block distribution on the (M+N) virtual channels, to obtain m×t2 data code blocks and n×t2 FEC check code blocks, where m×t2 is less than or equal to m_max, m_max is t1 times the value of M, n×t2 is less than or equal to n_max = N×t1, n_max is t1 times the value of N, and t1 and t2 are positive integers.
E4. Discard the alignment marker code blocks after completing the alignment and reassembly by using the alignment marker code blocks.

The only difference between steps E1 to E4 and the foregoing steps D1 and D2 lies in that processed data is data from two physical channel groups, and herein descriptions are further given in detail.

In this embodiment of the present invention, if step 203 is performed, for the receive end, the data sent through the at most H interfaces of the first physical channel group and the data sent through the at most K interfaces of the second physical channel group are received, and this embodiment of the present invention may further include the following steps:

### E1 to E2.

E5. Align and reassemble, according to the alignment marker code blocks, the code block streams on the (M+N) virtual channels, to obtain m×t2 data code blocks, n×t2 FEC check code blocks, and i idle code blocks, where m×t2 is less than or equal to m_max = M×t1, m_max is t1 times the value of M, n×t2 is less than n_max = N×t1, n_max is t times the value of N, and t1 and t2 are positive integers. Generally, in design, m×t2 = m_max = M×t1 is set. The number of inserted idle code blocks i equals n_max minus n×t2.

E6. Discard the alignment marker code blocks and the i idle code blocks after completing the alignment and reassembly by using the alignment marker code blocks.

A difference between steps E5 to E6 and the foregoing steps E3 to E4 lies in whether the data sent by the transmit end through the at most K interfaces of the second physical channel group includes an idle code block; and if an idle code block is included, the idle code block needs to be found and discarded.

It should be noted that, in this embodiment of the present invention, after step E4 and step E6 are completed, this embodiment of the present invention may further include the following steps:
F1. Correct, at an FEC coding processing sublayer, a bit error in the m×t2 data code blocks by using the n×t2 FEC check code blocks.
F2. Discard the n×t2 FEC check code blocks after completing the correcting a bit error, and input m×t2 data code blocks that are obtained after correcting the bit error to a physical coding sublayer.

In the foregoing embodiment, there are alignment marker code blocks periodically inserted, by the transmit end, into code block streams that are formed by FEC check code blocks and data code blocks, and periodical alignment marker code blocks that can be identified need to be found herein; according to the marker code blocks, the data code blocks and the FEC check code blocks are aligned; then the alignment marker code blocks are deleted complete code block streams are combined; the code block streams are sent to the FEC coding processing sublayer for decoding processing; a correctable bit error caused after a data code block is transmitted is corrected; and after the bit error is corrected, the FEC check code blocks are deleted, and the data code blocks are recovered.

It should be noted that, in this embodiment of the present invention, after step E4 and step E6 are completed, this embodiment of the present invention may further include the following steps:
F3. After acquiring the n×t2 FEC check code blocks by alignment and reassembly, discard the n×t2 FEC check code blocks, and input the m×t2 data code blocks to a physical coding sublayer.

A difference between step F3 and the foregoing steps F1 and F2 lies in that, in step F3, error correction is not performed by using the FEC check code blocks, but the FEC check code blocks are directly discarded, and the m×t2 data code blocks are transmitted to the physical coding sublayer.

In this embodiment of the present invention, specific to a data sending method on a transmit end side, a receive end side performs a receiving processing process corresponding to the sending method. The receive end receives data that is sent through at most H interfaces of a first physical channel group, determines whether there is data sent by the transmit end to the receive end through at most K interfaces of a second physical channel group, and when there is data sent by the transmit end through the at most K interfaces, the receive end may flexibly choose whether to receive the data; flexibility of the receive end is relatively strong.

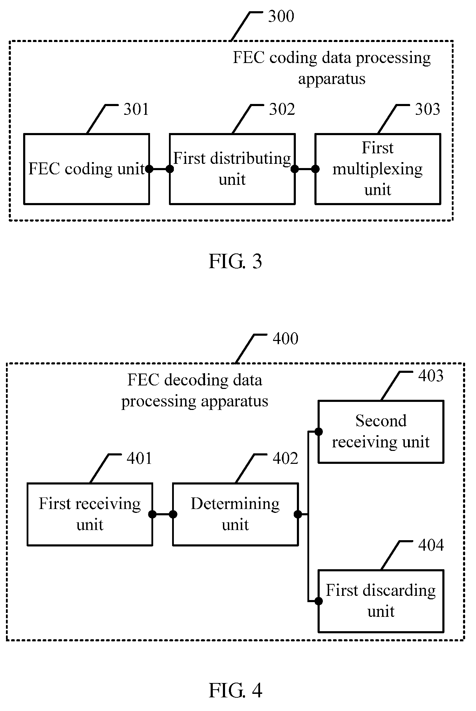

The foregoing embodiments introduce the FEC coding data processing method provided by the embodiments of the present invention. In the following, an FEC coding data processing apparatus corresponding to the method is introduced. Referring to FIG. 3, an FEC coding data processing apparatus 300 includes:
an FEC coding unit 301, configured to perform, at a forward error correction FEC coding processing sublayer by using m data code blocks as one group, FEC coding on a data code block sequence output by a physical coding sublayer, to generate n FEC check code blocks, where both m and n are positive integers;
a distributing unit 302, configured to respectively distribute m×t2 data code blocks and n×t2 FEC check code blocks to M virtual channels of a first virtual channel group and N virtual channels of a second virtual channel group, where m×t2 is less than or equal to m_max, m_max is t1 times the value of M, n×t2 is less than or equal to n_max, n_max is t1 times the value of N, and t1 and t2 are positive integers; and
a multiplexing unit 303, configured to respectively multiplex, according to geared speed bit by bit multiplexing, data distributed to the first virtual channel group and data distributed to the second virtual channel group to at most H interfaces of a first physical channel group and at most K interfaces of a second physical channel group, where M is an integral multiple of H, and N is an integral multiple of K.

It should be noted that, for the FEC coding data processing apparatus 300 provided by this embodiment of the present invention, as one implementable manner, the following unit module (not shown in FIG. 3) may further be included:
an aligning unit, configured to periodically insert alignment marker code blocks into code block streams carried on (M+N) virtual channels of the first virtual channel group and the second virtual channel group, where each alignment marker code block further marks a number of a virtual channel on which the alignment marker code block is located, and the alignment marker code block is used for a receive end to perform alignment, reassembly, and recovery after acquiring the code block streams.

It should be noted that the at most H interfaces of the first physical channel group specifically are H1 electrical interfaces and H2 optical interfaces, and the at most K interfaces of the second physical channel group specifically are K1 electrical interfaces and K2 optical interfaces, where H is the least common multiple of H1 and H2, and K is the least common multiple of K1 and K2; in this case, for the multiplexing unit 303 provided by this embodiment of the present invention, as one implementable manner, the following unit module (not shown in FIG. 3) may further be included:
a multiplexing subunit, configured to respectively multiplex, according to the geared speed bit by bit multiplexing, the data distributed to the first virtual channel group and the data distributed to the second virtual channel group to the H1 electrical interfaces of the first physical channel group and the K1 electrical interfaces of the second physical channel group, where H1 is an integral multiple of M, and K1 is an integral multiple of N; and
a mapping subunit, configured to: after multiplexing, mapping, and modulation are separately performed on all data multiplexed to the H1 electrical interfaces and all data multiplexed to the K1 electrical interfaces, send the data respectively to the H2 optical interfaces and the K2 optical interfaces, where M is an integral multiple of H2, and N is an integral multiple of K2.

It should be noted that, for the FEC coding data processing apparatus 300 provided by this embodiment of the present invention, as another implementable manner, the following unit module (not shown in FIG. 3) may further be included:
a generating unit, configured to generate i idle code blocks, where the idle code block includes idle information bits, and i equals n_max minus n; and
the distributing unit 302 is further configured to distribute the i idle code blocks to the N virtual channels of the first virtual channel group, where the data distributed to the first virtual channel group includes the n FEC check code blocks and the i idle code blocks.

It should be noted that, for the FEC coding data processing apparatus 300 provided by this embodiment of the present invention, as another implementable manner, the following unit module (not shown in FIG. 3) may further be included:
a first discarding unit, configured to discard all data multiplexed to the at most K interfaces; and
a first transmitting unit, configured to transmit all data multiplexed to the at most H interfaces to the receive end through a physical transmission medium.

It should be noted that, for the FEC coding data processing apparatus 300 provided by this embodiment of the present invention, as another implementable manner, the following unit module (not shown in FIG. 3) may further be included:
a second transmitting unit, configured to transmit all data multiplexed to the at most H interfaces and all data multiplexed to the at most K interfaces to the receive end through a physical transmission medium.

It should be noted that, for the FEC coding data processing apparatus 300 provided by this embodiment of the present invention, as another implementable manner, the following unit module (not shown in FIG. 3) may further be included:
a second discarding unit, configured to discard the i idle code blocks in all data multiplexed to the at most K interfaces; and
a third transmitting unit, configured to transmit all data multiplexed to the at most H interfaces and the n FEC check code blocks in all data multiplexed to the K interfaces to the receive end through a physical transmission medium.

It should be noted that content such as information exchange between the modules/units of the apparatus and the execution processes thereof is based on the same idea as the method embodiments of the present invention, and produces the same technical effects as the method embodiments of the present invention. For the specific content, refer to the description in the method embodiment of the present invention shown in FIG. 1, and the details are not described herein again.

In this embodiment of the present invention, an FEC coding unit performs, at an FEC coding processing sublayer, FEC coding on a data code block sequence by using m data code blocks as one group, to generate n FEC check code blocks; then a distributing unit respectively distributes the data code blocks and the FEC check code blocks to a first virtual channel group and a second virtual channel group; and then a multiplexing unit respectively multiplexes, according to geared speed bit by bit multiplexing, data distributed to the first virtual channel group and data distributed to the second virtual channel group to interfaces of a first physical channel group and interfaces of the second virtual channel group. Because the n FEC check code blocks are first distributed to N virtual channels of the second virtual channel group, and then output to extra K interfaces of a second physical channel group through the N virtual channels after the geared speed bit by bit multiplexing, data transmission bandwidth of a system is not reduced. Because the data code blocks and the FEC check code blocks are respectively transmitted to the first physical channel group and the second physical channel group, flexibility and compatibility requirements are well met, the system is compatible with physical transmission interfaces of different types and performance and ensure an interconnection capability between them, and the system may choose to transmit the FEC check code blocks or not to transmit the FEC check code blocks according to performance of a transmission interface.

In the following, another FEC decoding data processing apparatus provided by an embodiment of the present invention is introduced. Referring to FIG. 4, an FEC decoding data processing apparatus 400 includes: a first receiving unit 401, a determining unit 402, and one unit of a second receiving unit 403 and a first discarding unit 404, where:
the first receiving unit 401 is configured to receive data that is sent by a transmit end to a receive end through at most H interfaces of a first physical channel group, where H is a positive integer;
the determining unit 402 is configured to determine whether there is data sent by the transmit end to the receive end through at most K interfaces of a second physical channel group; and
the second receiving unit 403 is configured to: when there is data sent by the transmit end through the at most K interfaces of the second physical channel group, receive the data sent through the at most K interfaces, where K is a positive integer; or
the first discarding unit 404 is configured to: when there is data sent by the transmit end through the at most K interfaces of the second physical channel group, discard the data sent through the at most K interfaces.

It should be noted that, for the FEC decoding data processing apparatus 400 provided by this embodiment of the present invention, as one implementable manner, if the apparatus 400 includes the first discarding unit 404, the apparatus further includes: a first demultiplexing unit, a first searching unit, a first aligning unit, and a first transmitting unit (not shown in FIG. 4), where:
the first demultiplexing unit is configured to extract, according to geared speed bit by bit demultiplexing, M data code block streams from the data sent through the at most H interfaces, where M is an integral multiple of H, and the M data code block streams correspond to M virtual channels of a first virtual channel group;
the first searching unit is configured to search for alignment marker code blocks inserted into the data code block streams on the M virtual channels;
the first aligning unit is configured to align and reassemble, according to the alignment marker code blocks, code block sequences that undergo code block distribution on the M virtual channels, to obtain m×t2 data code blocks, where m×t2 is less than or equal to m_max, m_max is t1 times the value of M, and t1 and t2 are positive integers;
the first discarding unit is further configured to discard the alignment marker code blocks after completing the alignment and reassembly by using the alignment marker code blocks; and
the first transmitting unit is configured to input the m×t2 data code blocks to a physical coding sublayer.

It should be noted that, for the FEC decoding data processing apparatus 400 provided by this embodiment of the present invention, as another implementable manner, if the apparatus 400 includes the second receiving unit 403, the apparatus 400 further includes: a second demultiplexing unit, a second searching unit, a second aligning unit, and a second discarding unit (not shown in FIG. 4), where:
the second demultiplexing unit is configured to extract, according to geared speed bit by bit demultiplexing, M data code block streams from the data sent through the at most H interfaces, and extract, according to the geared speed bit by bit demultiplexing, N FEC check code block streams from the data sent through the at most K interfaces, where M is an integral multiple of H, the M data code block streams correspond to M virtual channels of a first virtual channel group, N is an integral multiple of K, and the N data code block streams correspond to N virtual channels of a second virtual channel group;
the second searching unit is configured to search for alignment marker code blocks inserted into (M+N) code block streams that are formed by the data code block streams on the M virtual channels and FEC check code blocks on the N virtual channels;
the second aligning unit is configured to align and reassemble, according to the alignment marker code blocks, the code block streams on the (M+N) virtual channels, to obtain m×t2 data code blocks and n×t2 FEC check code blocks, where m×t2 is less than or equal to m_max, m_max is t1 times the value of M, n is less than or equal to n_max, n_max is t1 times the value of N, and t1 and t2 are positive integers; and
the second discarding unit is configured to discard the alignment marker code blocks after completing the alignment and reassembly by using the alignment marker code blocks.

It should be noted that, for the FEC decoding data processing apparatus 400 provided by this embodiment of the present invention, as another implementable manner, if the apparatus 400 includes the second receiving unit 403, the apparatus 400 further includes: a second demultiplexing unit, a second searching unit, a third aligning unit, and a third discarding unit (not shown in FIG. 4), where:
the second demultiplexing unit is configured to extract, according to geared speed bit by bit demultiplexing, M data code block streams from the data sent through the at most H interfaces, and extract, according to the geared speed bit by bit demultiplexing, N FEC check code block streams from the data sent through the at most K interfaces, where M is an integral multiple of H, the M data code block streams correspond to M virtual channels of a first virtual channel group, N is an integral multiple of K, and the N data code block streams correspond to N virtual channels of a second virtual channel group;
the second searching unit is configured to search for alignment marker code blocks inserted into (M+N) code block streams that are formed by the data code block streams on the M virtual channels and FEC check code blocks on the N virtual channels;
the third aligning unit is configured to align and reassemble, according to the alignment marker code blocks, the code block streams on the (M+N) virtual channels, to obtain m×t2 data code blocks, n×t2 FEC check code blocks, and i idle code blocks, where m×t2 is less than or equal to m_max, m_max is t1 times the value of M, n×t2 is less than n_max, n_max is t1 times the value of N, t1 and t2 are positive integers, and i equals n_max minus n; and
the third discarding unit is configured to discard the alignment marker code blocks and the i idle code blocks after completing the alignment and reassembly by using the alignment marker code blocks.

It should be noted that, based on the foregoing implementation manner, for the FEC decoding data processing apparatus 400 provided by this embodiment of the present invention, as another implementable manner, the apparatus 400 may further include (not shown in FIG. 4):
a correcting unit, configured to correct, at an FEC coding processing sublayer, a bit error in the m×t2 data code blocks by using the n×t2 FEC check code blocks;
a fourth discarding unit, configured to discard the n×t2 FEC check code blocks after completing the correcting a bit error; and
a second transmitting unit, configured to input m×t2 data code blocks that are obtained after correcting the bit error to a physical coding sublayer.

It should be noted that, based on the foregoing implementation manner, for the FEC decoding data processing apparatus 400 provided by this embodiment of the present invention, as another implementable manner, the apparatus 400 may further include (not shown in FIG. 4):
a fifth discarding unit, configured to: after the n×t2 FEC check code blocks by alignment and reassembly is acquired, discard the n×t2 FEC check code blocks; and
a third transmitting unit, configured to input the m×t2 data code blocks to a physical coding sublayer.

In this embodiment of the present invention, a first receiving unit 401 receives data that is sent through at most H interfaces of a first physical channel group; a determining unit 402 determines whether there is data sent by a transmit end to a receive end through at most K interfaces of a second physical channel group; and when there is data sent by the transmit end through the at most K interfaces, the receive end may flexibly choose whether to receive the data; flexibility of the receive end is relatively strong.

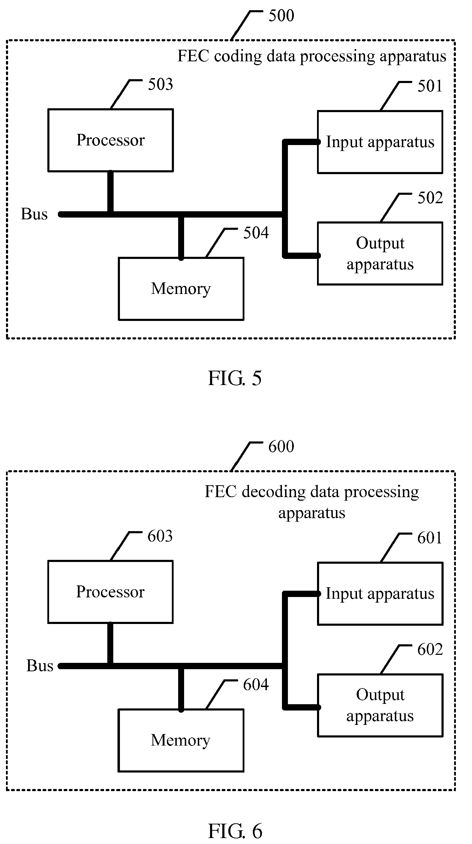

In the following, another FEC coding data processing apparatus provided by an embodiment of the present invention is introduced. Referring to FIG. 5, an FEC coding data processing apparatus 500 includes:
an input apparatus 501, an output apparatus 502, a processor 503, and a memory 504 (where the number of processors 503 in the FEC coding data processing apparatus 500 may be one or more, and one processor is used as an example in FIG. 5). In some embodiments of the present invention, the input apparatus 501, the output apparatus 502, the processor 503, and the memory 504 may be connected by using a bus or in other manners; and connecting by using a bus is used as an example in FIG. 5.

The processor 503 is configured to perform the following steps: performing, at a forward error correction FEC coding processing sublayer by using m data code blocks as one group, FEC coding on a data code block sequence output by a physical coding sublayer, to generate n FEC check code blocks, where both m and n are positive integers; respectively distributing m×t2 data code blocks and n×t2 FEC check code blocks to M virtual channels of a first virtual channel group and N virtual channels of a second virtual channel group, where m×t2 is less than or equal to m_max, m_max is t1 times the value of M, n is less than or equal to n_max, n_max is t1 times the value of N, and t1 and t2 are positive integers; and respectively multiplexing, according to geared speed bit by bit multiplexing, data distributed to the first virtual channel group and data distributed to the second virtual channel group to at most H interfaces of a first physical channel group and at most K interfaces of a second physical channel group, where M is an integral multiple of H, and N is an integral multiple of K.

In some embodiments of the present invention, the processor 503 further performs the following step: periodically inserting alignment marker code blocks into code block streams carried on (M+N) virtual channels of the first virtual channel group and the second virtual channel group, where each alignment marker code block further marks a number of a virtual channel on which the alignment marker code block is located, and the alignment marker code block is used for a receive end to perform alignment, reassembly, and recovery after acquiring the code block streams.

In some embodiments of the present invention, the at most H interfaces of the first physical channel group specifically are H1 electrical interfaces and H2 optical interfaces, and the at most K interfaces of the second physical channel group specifically are K1 electrical interfaces and K2 optical interfaces, where H is the least common multiple of H1 and H2, and K is the least common multiple of K1 and K2; and
the processor 503 specifically performs the following steps: respectively multiplexing, according to the geared speed bit by bit multiplexing, the data distributed to the first virtual channel group and the data distributed to the second virtual channel group to the H1 electrical interfaces of the first physical channel group and the K1 electrical interfaces of the second physical channel group, where H1 is an integral multiple of M, and K1 is an integral multiple of N; and after separately performing multiplexing, mapping, and modulation on all data multiplexed to the H1 electrical interfaces and all data multiplexed to the K1 electrical interfaces, sending the data respectively to the H2 optical interfaces and the K2 optical interfaces, where M is an integral multiple of H2, and N is an integral multiple of K2.

In some embodiments of the present invention, the processor 503 further performs the following steps: generating i idle code blocks, where the idle code block includes idle information bits, and i equals n_max minus n; and distributing the i idle code blocks to the N virtual channels of the first virtual channel group, where the data distributed to the first virtual channel group includes the n FEC check code blocks and the i idle code blocks.

In some embodiments of the present invention, the processor 503 further performs the following step: discarding all data multiplexed to the at most K interfaces; and
the output apparatus is configured to transmit all data multiplexed to the at most H interfaces to the receive end through a physical transmission medium.

In some embodiments of the present invention, the output apparatus is configured to transmit all data multiplexed to the at most H interfaces and all data multiplexed to the at most K interfaces to the receive end through a physical transmission medium.

In some embodiments of the present invention, the processor 503 further performs the following step: discarding the i idle code blocks in all data multiplexed to the at most K interfaces; and
the output apparatus is configured to transmit all data multiplexed to the at most H interfaces and the n FEC check code blocks in all data multiplexed to the at most K interfaces to the receive end through a physical transmission medium.

In this embodiment of the present invention, at an FEC coding processing sublayer, FEC coding is performed on m data code blocks to generate n FEC check code blocks; then the data code blocks and the FEC check code blocks are respectively distributed to a first virtual channel group and a second virtual channel group; and then, according to geared speed bit by bit multiplexing, data distributed to the first virtual channel group and data distributed to the second virtual channel group are respectively multiplexed to interfaces of a first physical channel group and interfaces of the second virtual channel group. Because the n check code blocks are first distributed to N virtual channels of the second virtual channel group, and then output to K interfaces of a second physical channel group through the N virtual channels after the geared speed bit by bit multiplexing, the FEC check code blocks use an extra space-separated transmission channel, which implements transmission separate from and independent of data, and in this embodiment of the present invention, FEC is allowed to be performed on a data code block stream before distribution, which is applicable to an occasion with a low-latency requirement.

In the following, another FEC decoding data processing apparatus provided by an embodiment of the present invention is introduced. Referring to FIG. 6, an FEC decoding data processing apparatus 600 includes:
an input apparatus 601, an output apparatus 602, a processor 603, and a memory 604 (where the number of processors 603 in the FEC decoding data processing apparatus 600 may be one or more, and one processor is used as an example in FIG. 6). In some embodiments of the present invention, the input apparatus 601, the output apparatus 602, the processor 603, and the memory 604 may be connected by using a bus or in other manners; and connecting by using a bus is used as an example in FIG. 6.

The processor 603 is configured to perform the following steps: acquiring, from the input apparatus, data that is sent by a transmit end to a receive end through at most H interfaces of a first physical channel group, where H is a positive integer;
determining whether there is data sent by the transmit end to the receive end through at most K interfaces of a second physical channel group, where K is a positive integer; and
if there is data sent by the transmit end through the at most K interfaces of the second physical channel group, receiving the data sent through the at most K interfaces, or, discarding the data sent through the at most K interfaces.

In some embodiments of the present invention, the processor 603 further performs the following steps:
extracting, according to geared speed bit by bit demultiplexing, M data code block streams from the data sent through the at most H interfaces, where M is an integral multiple of H, and the M data code block streams correspond to M virtual channels of a first virtual channel group;
searching for alignment marker code blocks inserted into the data code block streams on the M virtual channels;
aligning and reassembling, according to the alignment marker code blocks, code block sequences that undergo code block distribution on the M virtual channels, to obtain m×t2 data code blocks, where m×t2 is less than or equal to m_max, m_max is t1 times the value of M, and t1 and t2 are positive integers;
discarding the alignment marker code blocks after completing the alignment and reassembly by using the alignment marker code blocks; and
inputting the m×t2 data code blocks to a physical coding sublayer.

In some embodiments of the present invention, the processor 603 further performs the following steps: extracting, according to geared speed bit by bit demultiplexing, M data code block streams from the data sent through the at most H interfaces, and extracting, according to the geared speed bit by bit demultiplexing, N FEC check code block streams from the data sent through the at most K interfaces, where M is an integral multiple of H, the M data code block streams correspond to M virtual channels of a first virtual channel group, N is an integral multiple of K, and the N data code block streams correspond to N virtual channels of a second virtual channel group;
searching for alignment marker code blocks inserted into (M+N) code block streams that are formed by the data code block streams on the M virtual channels and FEC check code blocks on the N virtual channels;
aligning and reassembling, according to the alignment marker code blocks, code block sequences that undergo code block distribution on the (M+N) virtual channels, to obtain m×t2 data code blocks and n×t2 FEC check code blocks, where m×t2 is less than or equal to m_max, m_max is t1 times the value of M, n is less than or equal to n_max, n_max is t1 times the value of N, and t1 and t2 are positive integers; and
discarding the alignment marker code blocks after completing the alignment and reassembly by using the alignment marker code blocks.

In some embodiments of the present invention, the processor 603 further performs the following steps: extracting, according to geared speed bit by bit demultiplexing, M data code block streams from the data sent through the at most H interfaces, and extracting, according to the geared speed bit by bit demultiplexing, N FEC check code block streams from the data sent through the at most K interfaces, where M is an integral multiple of H, the M data code block streams correspond to M virtual channels of a first virtual channel group, N is an integral multiple of K, and the N data code block streams correspond to N virtual channels of a second virtual channel group;
searching for alignment marker code blocks inserted into code block streams that are formed by the data code block streams on the M virtual channels and FEC check code blocks on the N virtual channels;
aligning and reassembling, according to the alignment marker code blocks, the code block streams on the (M+N) virtual channels, to obtain m×t2 data code blocks, n×t2 FEC check code blocks, and i idle code blocks, where m×t2 is less than or equal to m_max, m_max is t1 times the value of M, n×t2 is less than n_max, n_max is t1 times the value of N, t1 and t2 are positive integers, and i equals n_max minus n; and
discarding the alignment marker code blocks and the i idle code blocks after completing the alignment and reassembly by using the alignment marker code blocks.

In some embodiments of the present invention, the processor 603 further performs the following steps: correcting, at an FEC coding processing sublayer, a bit error in the m×t2 data code blocks by using the n×t2 FEC check code blocks; and
discarding the n×t2 FEC check code blocks after completing the correcting a bit error, and inputting m×t2 data code blocks that are obtained after correcting the bit error to a physical coding sublayer.

In some embodiments of the present invention, the processor 603 further performs the following step: after acquiring the n×t2 FEC check code blocks by alignment and reassembly, discarding the n×t2 FEC check code blocks, and inputting the m×t2 data code blocks to a physical coding sublayer.

In this embodiment of the present invention, data that is sent through at most H interfaces of a first physical channel group is received; whether there is data sent by a transmit end to a receive end through at most K interfaces of a second physical channel group is determined; and when there is data sent by the transmit end through the at most K interfaces, the receive end may flexibly choose whether to receive the data; flexibility of the receive end is relatively strong.

A person of ordinary skill in the art may understand that all or a part of the steps of the methods in the embodiments may be implemented by a program instructing relevant hardware. The program may be stored in a computer readable storage medium. The storage medium may include: a read-only memory, a magnetic disk, or an optical disc.

The FEC coding/decoding data processing method and the related apparatus provided by the present invention are described above in detail. With respect to the implementation manners and the application scope, modifications may be made by a person of ordinary skill in the art according to the idea of the present invention. Therefore, this specification shall not be construed as a limitation to the present invention.

## Claims

1. An FEC coding data processing method, comprising:
performing, at a forward error correction FEC coding processing sublayer by using m data code blocks as one group, FEC coding on a data code block sequence output by a physical coding sublayer, to generate n FEC check code blocks, wherein both m and n are positive integers;
respectively distributing m×t2 data code blocks and n×t2 FEC check code blocks to M virtual channels of a first virtual channel group and N virtual channels of a second virtual channel group, wherein m×t2 is less than or equal to m_max, m_max is t1 times the value of M, n is less than or equal to n_max, n_max is t1 times the value of N, and t1 and t2 are positive integers; and
respectively multiplexing, according to geared speed bit by bit multiplexing, data distributed to the first virtual channel group and data distributed to the second virtual channel group to at most H interfaces of a first physical channel group and at most K interfaces of a second physical channel group, wherein M is an integral multiple of H, and N is an integral multiple of K.

2. The method according to claim 1, after the m data code blocks and the n FEC check code blocks are respectively distributed to the M virtual channels of the first virtual channel group and the N virtual channels of the second virtual channel group, further comprising:
periodically inserting alignment marker code blocks into code block streams carried on (M+N) virtual channels of the first virtual channel group and the second virtual channel group, wherein each alignment marker code block further marks a number of a virtual channel on which the alignment marker code block is located, and the alignment marker code block is used for a receive end to perform alignment, reassembly, and recovery on the code block streams after acquiring the code block streams.

3. The method according to claim 1 or 2, wherein the at most H interfaces of the first physical channel group specifically are H1 electrical interfaces and H2 optical interfaces, and the at most K interfaces of the second physical channel group specifically are K1 electrical interfaces and K2 optical interfaces, wherein H is the least common multiple of H1 and H2, and K is the least common multiple of K1 and K2; and
the respectively multiplexing, according to geared speed bit by bit multiplexing, data distributed to the first virtual channel group and data distributed to the second virtual channel group to at most H interfaces of a first physical channel group and at most K interfaces of a second physical channel group comprises:
respectively multiplexing, according to the geared speed bit by bit multiplexing, the data distributed to the first virtual channel group and the data distributed to the second virtual channel group to the H1 electrical interfaces of the first physical channel group and the K1 electrical interfaces of the second physical channel group, wherein M is an integral multiple of H1, and N is an integral multiple of K1; and
after separately performing multiplexing, mapping, and modulation on all data multiplexed to the H1 electrical interfaces and all data multiplexed to the K1 electrical interfaces, sending the data respectively to the H2 optical interfaces and the K2 optical interfaces, wherein M is an integral multiple of H2, and N is an integral multiple of K2.

4. The method according to any one of claims 1 to 3, after the performing, at a forward error correction FEC coding processing sublayer, FEC coding on m data code blocks output by a physical coding sublayer, to generate n FEC check code blocks, further comprising:
generating i idle code blocks, wherein the idle code block comprises idle information bits, and i equals n_max minus n; and
distributing the i idle code blocks to the N virtual channels of the first virtual channel group, wherein the data distributed to the first virtual channel group comprises the n FEC check code blocks and the i idle code blocks.

5. The method according to any one of claims 1 to 4, after the respectively multiplexing, according to geared speed bit by bit multiplexing, data distributed to the first virtual channel group and data distributed to the second virtual channel group to at most H interfaces of a first physical channel group and at most K interfaces of a second physical channel group, further comprising:
discarding all data multiplexed to the at most K interfaces, and transmitting all data multiplexed to the at most H interfaces to the receive end through a physical transmission medium.

6. The method according to any one of claims 1 to 4, after the respectively multiplexing, according to geared speed bit by bit multiplexing, data distributed to the first virtual channel group and data distributed to the second virtual channel group to at most H interfaces of a first physical channel group and at most K interfaces of a second physical channel group, further comprising:
transmitting all data multiplexed to the at most H interfaces and all data multiplexed to the at most K interfaces to the receive end through a physical transmission medium.

7. The method according to claim 4, after the respectively multiplexing, according to geared speed bit by bit multiplexing, data distributed to the first virtual channel group and data distributed to the second virtual channel group to at most H interfaces of a first physical channel group and at most K interfaces of a second physical channel group, further comprising:
discarding the i idle code blocks in all data multiplexed to the at most K interfaces, and transmitting all data multiplexed to the at most H interfaces and the n FEC check code blocks in all data multiplexed to the at most K interfaces to the receive end through a physical transmission medium.

8. The method according to any one of claims 1 to 7, wherein the m data code blocks and the n FEC check code blocks are distinguished by using different synchronization headers.

9. An FEC decoding data processing method, comprising:
receiving data that is sent by a transmit end to a receive end through at most H interfaces of a first physical channel group, wherein H is a positive integer;
determining whether there is data sent by the transmit end to the receive end through at most K interfaces of a second physical channel group, wherein K is a positive integer; and
if there is data sent by the transmit end through the at most K interfaces of the second physical channel group, receiving the data sent through the at most K interfaces, or, discarding the data sent through the at most K interfaces.

10. The method according to claim 9, after the discarding the data sent through the at most K interfaces, further comprising:
extracting, according to geared speed bit by bit demultiplexing, M data code block streams from the data sent through the at most H interfaces, wherein M is an integral multiple of H, and the M data code block streams correspond to M virtual channels of a first virtual channel group;
searching for alignment marker code blocks inserted into the data code block streams on the M virtual channels;
aligning and reassembling, according to the alignment marker code blocks, code block sequences that undergo code block distribution on the M virtual channels, to obtain m×t2 data code blocks, wherein m×t2 is less than or equal to m_max, m_max is t1 times the value of M, and t1 and t2 are positive integers;
discarding the alignment marker code blocks after completing the alignment and reassembly by using the alignment marker code blocks; and
inputting the m×t2 data code blocks to a physical coding sublayer.

11. The method according to claim 9, after the receiving the data sent through the at most K interfaces, further comprising:
extracting, according to geared speed bit by bit demultiplexing, M data code block streams from the data sent through the at most H interfaces, and extracting, according to the geared speed bit by bit demultiplexing, N FEC check code block streams from the data sent through the at most K interfaces, wherein M is an integral multiple of H, the M data code block streams correspond to M virtual channels of a first virtual channel group, N is an integral multiple of K, and the N data code block streams correspond to N virtual channels of a second virtual channel group;
searching for alignment marker code blocks inserted into (M+N) code block streams that are formed by the data code block streams on the M virtual channels and FEC check code blocks on the N virtual channels;
aligning and reassembling, according to the alignment marker code blocks, code block sequences that undergo code block distribution on the (M+N) virtual channels, to obtain m×t2 data code blocks and n×t2 FEC check code blocks, wherein m×t2 is less than or equal to m_max, m_max is t1 times the value of M, n is less than or equal to n_max, n_max is t1 times the value of N, and t1 and t2 are positive integers; and
discarding the alignment marker code blocks after completing the alignment and reassembly by using the alignment marker code blocks.

12. The method according to claim 9, after the receiving the data sent through the at most K interfaces, further comprising:
extracting, according to geared speed bit by bit demultiplexing, M data code block streams from the data sent through the at most H interfaces, and extracting, according to the geared speed bit by bit demultiplexing, N FEC check code block streams from the data sent through the at most K interfaces, wherein M is an integral multiple of H, the M data code block streams correspond to M virtual channels of a first virtual channel group, N is an integral multiple of K, and the N data code block streams correspond to N virtual channels of a second virtual channel group;
searching for alignment marker code blocks inserted into code block streams that are formed by the data code block streams on the M virtual channels and FEC check code blocks on the N virtual channels;
aligning and reassembling, according to the alignment marker code blocks, the code block streams on the (M+N) virtual channels, to obtain m×t2 data code blocks, n×t2 FEC check code blocks, and i idle code blocks, wherein m×t2 is less than or equal to m_max, m_max is t1 times the value of M, n×t2 is less than n_max, n_max is t1 times the value of N, t1 and t2 are positive integers, and i equals n_max minus n; and
discarding the alignment marker code blocks and the i idle code blocks after completing the alignment and reassembly by using the alignment marker code blocks.

13. The method according to claim 11 or 12, after the discarding the alignment marker code blocks after completing the alignment and reassembly by using the alignment marker code blocks, further comprising:
correcting, at an FEC coding processing sublayer, a bit error in the m×t2 data code blocks by using the n×t2 FEC check code blocks; and
discarding the n×t2 FEC check code blocks after completing the correcting a bit error, and inputting m×t2 data code blocks that are obtained after correcting the bit error to a physical coding sublayer.

14. The method according to claim 11 or 12, after the discarding the alignment marker code blocks after completing the alignment and reassembly by using the alignment marker code blocks, further comprising:
after acquiring the n×t2 FEC check code blocks by alignment and reassembly, discarding the n×t2 FEC check code blocks, and inputting the m×t2 data code blocks to a physical coding sublayer.

15. An FEC coding data processing apparatus, comprising:
an FEC coding unit, configured to perform, at a forward error correction FEC coding processing sublayer by using m data code blocks as one group, FEC coding on a data code block sequence output by a physical coding sublayer, to generate n FEC check code blocks, wherein both m and n are positive integers;
a distributing unit, configured to respectively distribute m×t2 data code blocks and n×t2 FEC check code blocks to M virtual channels of a first virtual channel group and N virtual channels of a second virtual channel group, wherein m×t2 is less than or equal to m_max, m_max is t1 times the value of M, n×t2 is less than or equal to n_max, n_max is t1 times the value of N, and t1 and t2 are positive integers; and
a multiplexing unit, configured to respectively multiplex, according to geared speed bit by bit multiplexing, data distributed to the first virtual channel group and data distributed to the second virtual channel group to at most H interfaces of a first physical channel group and at most K interfaces of a second physical channel group, wherein M is an integral multiple of H, and N is an integral multiple of K.

16. The apparatus according to claim 15, wherein the apparatus further comprises:
an aligning unit, configured to periodically insert alignment marker code blocks into code block streams carried on (M+N) virtual channels of the first virtual channel group and the second virtual channel group, wherein each alignment marker code block further marks a number of a virtual channel on which the alignment marker code block is located, and the alignment marker code block is used for a receive end to perform alignment, reassembly, and recovery after acquiring the code block streams.

17. The apparatus according to claim 15 or 16, wherein the at most H interfaces of the first physical channel group specifically are H1 electrical interfaces and H2 optical interfaces, and the at most K interfaces of the second physical channel group specifically are K1 electrical interfaces and K2 optical interfaces, wherein H is the least common multiple of H1 and H2, and K is the least common multiple of K1 and K2; and
the multiplexing unit comprises:
a multiplexing subunit, configured to respectively multiplex, according to the geared speed bit by bit multiplexing, the data distributed to the first virtual channel group and the data distributed to the second virtual channel group to the H1 electrical interfaces of the first physical channel group and the K1 electrical interfaces of the second physical channel group, wherein H1 is an integral multiple of M, and K1 is an integral multiple of N; and
a mapping subunit, configured to: after multiplexing, mapping, and modulation are separately performed on all data multiplexed to the H1 electrical interfaces and all data multiplexed to the K1 electrical interfaces, send the data respectively to the H2 optical interfaces and the K2 optical interfaces, wherein M is an integral multiple of H2, and N is an integral multiple of K2.

18. The apparatus according to any one of claims 15 to 17, wherein the apparatus further comprises: a generating unit, configured to generate i idle code blocks, wherein the idle code block comprises idle information bits, and i equals n_max minus n; and
the distributing unit is further configured to distribute the i idle code blocks to the N virtual channels of the first virtual channel group, wherein the data distributed to the first virtual channel group comprises the n FEC check code blocks and the i idle code blocks.

19. The apparatus according to any one of claims 15 to 17, wherein the apparatus further comprises:
a first discarding unit, configured to discard all data multiplexed to the at most K interfaces; and
a first transmitting unit, configured to transmit all data multiplexed to the at most H interfaces to the receive end through a physical transmission medium.

20. The apparatus according to any one of claims 15 to 17, wherein the apparatus further comprises:
a second transmitting unit, configured to transmit all data multiplexed to the at most H interfaces and all data multiplexed to the at most K interfaces to the receive end through a physical transmission medium.

21. The apparatus according to any one of claim 18, wherein the apparatus further comprises:
a second discarding unit, configured to discard the i idle code blocks in all data multiplexed to the at most K interfaces; and
a third transmitting unit, configured to transmit all data multiplexed to the at most H interfaces and the n FEC check code blocks in all data multiplexed to the at most K interfaces to the receive end through a physical transmission medium.

22. An FEC decoding data processing apparatus, comprising: a first receiving unit, a determining unit, and one unit of a second receiving unit and a first discarding unit, wherein:
the first receiving unit is configured to receive data that is sent by a transmit end to a receive end through at most H interfaces of a first physical channel group, wherein H is a positive integer;
the determining unit is configured to determine whether there is data sent by the transmit end to the receive end through at most K interfaces of a second physical channel group; and
the second receiving unit is configured to: when there is data sent by the transmit end through the at most K interfaces of the second physical channel group, receive the data sent through the at most K interfaces, wherein K is a positive integer; or
the first discarding unit is configured to: when there is data sent by the transmit end through the at most K interfaces of the second physical channel group, discard the data sent through the at most K interfaces.

23. The apparatus according to claim 22, wherein, if the apparatus comprises the first discarding unit, the apparatus further comprises: a first demultiplexing unit, a first searching unit, a first aligning unit, and a first transmitting unit, wherein:
the first demultiplexing unit is configured to extract, according to geared speed bit by bit demultiplexing, M data code block streams from the data sent through the at most H interfaces, wherein M is an integral multiple of H, and the M data code block streams correspond to M virtual channels of a first virtual channel group;
the first searching unit is configured to search for alignment marker code blocks inserted into the data code block streams on the M virtual channels;
the first aligning unit is configured to align and reassemble, according to the alignment marker code blocks, code block sequences that undergo code block distribution on the M virtual channels, to obtain m×t2 data code blocks, wherein m×t2 is less than or equal to m_max, m_max is t1 times the value of M, and t1 and t2 are positive integers;
the first discarding unit is further configured to discard the alignment marker code blocks after completing the alignment and reassembly by using the alignment marker code blocks; and
the first transmitting unit is configured to input the m×t2 data code blocks to a physical coding sublayer.

24. The apparatus according to claim 22, wherein, if the apparatus comprises the second receiving unit, the apparatus further comprises: a second demultiplexing unit, a second searching unit, a second aligning unit, and a second discarding unit, wherein:
the second demultiplexing unit is configured to extract, according to geared speed bit by bit demultiplexing, M data code block streams from the data sent through the at most H interfaces, and extract, according to the geared speed bit by bit demultiplexing, N FEC check code block streams from the data sent through the at most K interfaces, wherein M is an integral multiple of H, the M data code block streams correspond to M virtual channels of a first virtual channel group, N is an integral multiple of K, and the N data code block streams correspond to N virtual channels of a second virtual channel group;
the second searching unit is configured to search for alignment marker code blocks inserted into (M+N) code block streams that are formed by the data code block streams on the M virtual channels and FEC check code blocks on the N virtual channels;
the second aligning unit is configured to align and reassemble, according to the alignment marker code blocks, the code block streams on the (M+N) virtual channels, to obtain m×t2 data code blocks and n×t2 FEC check code blocks, wherein m×t2 is less than or equal to m_max, m_max is t1 times the value of M, n is less than or equal to n_max, n_max is t1 times the value of N, and t1 and t2 are positive integers; and
the second discarding unit is configured to discard the alignment marker code blocks after completing the alignment and reassembly by using the alignment marker code blocks.

25. The apparatus according to claim 22, wherein, if the apparatus comprises the second receiving unit, the apparatus further comprises: a second demultiplexing unit, a second searching unit, a third aligning unit, and a third discarding unit, wherein:
the second demultiplexing unit is configured to extract, according to geared speed bit by bit demultiplexing, M data code block streams from the data sent through the at most H interfaces, and extract, according to the geared speed bit by bit demultiplexing, N FEC check code block streams from the data sent through the at most K interfaces, wherein M is an integral multiple of H, the M data code block streams correspond to M virtual channels of a first virtual channel group, N is an integral multiple of K, and the N data code block streams correspond to N virtual channels of a second virtual channel group;
the second searching unit is configured to search for alignment marker code blocks inserted into (M+N) code block streams that are formed by the data code block streams on the M virtual channels and FEC check code blocks on the N virtual channels;
the third aligning unit is configured to align and reassemble, according to the alignment marker code blocks, the code block streams on the (M+N) virtual channels, to obtain mxt2 data code blocks, nxt2 FEC check code blocks, and i idle code blocks, wherein mxt2 is less than or equal to m_max, m_max is t1 times the value of M, nxt2 is less than n_max, n_max is t1 times the value of N, t1 and t2 are positive integers, and i equals n_max minus n; and
the third discarding unit is configured to discard the alignment marker code blocks and the i idle code blocks after completing the alignment and reassembly by using the alignment marker code blocks.

26. The apparatus according to claim 24 or 25, wherein the apparatus further comprises:
a correcting unit, configured to correct, at an FEC coding processing sublayer, a bit error in the mxt2 data code blocks by using the nxt2 FEC check code blocks;
a fourth discarding unit, configured to discard the nxt2 FEC check code blocks after completing the correcting a bit error; and
a second transmitting unit, configured to input mxt2 data code blocks that are obtained after correcting the bit error to a physical coding sublayer.

27. The apparatus according to claim 24 or 25, wherein the apparatus further comprises:
a fifth discarding unit, configured to: after the nxt2 FEC check code blocks by alignment and reassembly is acquired, discard the nxt2 FEC check code blocks; and
a third transmitting unit, configured to input the mxt2 data code blocks to a physical coding sublayer.

28. An FEC coding data processing apparatus, comprising: an input apparatus, an output apparatus, a memory, and a processor, wherein:
the processor performs the following steps:
performing, at a forward error correction FEC coding processing sublayer by using m data code blocks as one group, FEC coding on a data code block sequence output by a physical coding sublayer, to generate n FEC check code blocks, wherein both m and n are positive integers;
respectively distributing mxt2 data code blocks and nxt2 FEC check code blocks to M virtual channels of a first virtual channel group and N virtual channels of a second virtual channel group, wherein mxt2 is less than or equal to m_max, m_max is t1 times the value of M, n is less than or equal to n_max, n_max is t1 times the value of N, and t1 and t2 are positive integers; and
respectively multiplexing, according to geared speed bit by bit multiplexing, data distributed to the first virtual channel group and data distributed to the second virtual channel group to at most H interfaces of a first physical channel group and at most K interfaces of a second physical channel group, wherein M is an integral multiple of H, and N is an integral multiple of K.

29. The apparatus according to claim 28, wherein the processor further performs the following step:
periodically inserting alignment marker code blocks into code block streams carried on (M+N) virtual channels of the first virtual channel group and the second virtual channel group, wherein each alignment marker code block further marks a number of a virtual channel on which the alignment marker code block is located, and the alignment marker code block is used for a receive end to perform alignment, reassembly, and recovery after acquiring the code block streams.

30. The apparatus according to claim 28 or 29, wherein the at most H interfaces of the first physical channel group specifically are H1 electrical interfaces and H2 optical interfaces, and the at most K interfaces of the second physical channel group specifically are K1 electrical interfaces and K2 optical interfaces, wherein H is the least common multiple of H1 and H2, and K is the least common multiple of K1 and K2; and
the processor specifically performs the following steps:
respectively multiplexing, according to the geared speed bit by bit multiplexing, the data distributed to the first virtual channel group and the data distributed to the second virtual channel group to the H1 electrical interfaces of the first physical channel group and the K1 electrical interfaces of the second physical channel group, wherein H1 is an integral multiple of M, and K1 is an integral multiple of N; and
after separately performing multiplexing, mapping, and modulation on all data multiplexed to the H1 electrical interfaces and all data multiplexed to the K1 electrical interfaces, sending the data respectively to the H2 optical interfaces and the K2 optical interfaces, wherein M is an integral multiple of H2, and N is an integral multiple of K2.

31. The apparatus according to any one of claims 28 to 30, wherein the processor further performs the following steps:
generating i idle code blocks, wherein the idle code block comprises idle information bits, and i equals n_max minus n; and
distributing the i idle code blocks to the N virtual channels of the first virtual channel group, wherein the data distributed to the first virtual channel group comprises the n FEC check code blocks and the i idle code blocks.

32. The apparatus according to any one of claims 28 to 31, wherein the processor further performs the following step: discarding all data multiplexed to the at most K interfaces; and
the output apparatus is configured to transmit all data multiplexed to the at most H interfaces to the receive end through a physical transmission medium.

33. The apparatus according to any one of claims 28 to 32, wherein the output apparatus is configured to transmit all data multiplexed to the at most H interfaces and all data multiplexed to the at most K interfaces to the receive end through a physical transmission medium.

34. The apparatus according to claim 31, wherein the processor further performs the following step: discarding the i idle code blocks in all data multiplexed to the at most K interfaces; and
the output apparatus is configured to transmit all data multiplexed to the at most H interfaces and the n FEC check code blocks in all data multiplexed to the at most K interfaces to the receive end through a physical transmission medium.

35. An FEC decoding data processing apparatus, comprising: an input apparatus, an output apparatus, a memory, and a processor, wherein:
the processor performs the following steps:
acquiring, from the input apparatus, data that is sent by a transmit end to a receive end through at most H interfaces of a first physical channel group, wherein H is a positive integer;
determining whether there is data sent by the transmit end to the receive end through at most K interfaces of a second physical channel group, wherein K is a positive integer; and
if there is data sent by the transmit end through the at most K interfaces of the second physical channel group, receiving the data sent through the at most K interfaces, or, discarding the data sent through the at most K interfaces.

36. The apparatus according to claim 35, wherein the processor further performs the following steps:
extracting, according to geared speed bit by bit demultiplexing, M data code block streams from the data sent through the at most H interfaces, wherein M is an integral multiple of H, and the M data code block streams correspond to M virtual channels of a first virtual channel group;
searching for alignment marker code blocks inserted into the data code block streams on the M virtual channels;
aligning and reassembling, according to the alignment marker code blocks, code block sequences that undergo code block distribution on the M virtual channels, to obtain mxt2 data code blocks, wherein mxt2 is less than or equal to m_max, m_max is t1 times the value of M, and t1 and t2 are positive integers;
discarding the alignment marker code blocks after completing the alignment and reassembly by using the alignment marker code blocks; and
inputting the mxt2 data code blocks to a physical coding sublayer.

37. The apparatus according to claim 35, wherein the processor further performs the following steps:
extracting, according to geared speed bit by bit demultiplexing, M data code block streams from the data sent through the at most H interfaces, and extracting, according to the geared speed bit by bit demultiplexing, N FEC check code block streams from the data sent through the at most K interfaces, wherein M is an integral multiple of H, the M data code block streams correspond to M virtual channels of a first virtual channel group, N is an integral multiple of K, and the N data code block streams correspond to N virtual channels of a second virtual channel group;
searching for alignment marker code blocks inserted into (M+N) code block streams that are formed by the data code block streams on the M virtual channels and FEC check code blocks on the N virtual channels;
aligning and reassembling, according to the alignment marker code blocks, code block sequences that undergo code block distribution on the (M+N) virtual channels, to obtain mxt2 data code blocks and nxt2 FEC check code blocks, wherein mxt2 is less than or equal to m_max, m_max is t1 times the value of M, n is less than or equal to n_max, n_max is t1 times the value of N, and t1 and t2 are positive integers; and
discarding the alignment marker code blocks after completing the alignment and reassembly by using the alignment marker code blocks.

38. The apparatus according to claim 35, wherein the processor further performs the following steps:
extracting, according to geared speed bit by bit demultiplexing, M data code block streams from the data sent through the at most H interfaces, and extracting, according to the geared speed bit by bit demultiplexing, N FEC check code block streams from the data sent through the at most K interfaces, wherein M is an integral multiple of H, the M data code block streams correspond to M virtual channels of a first virtual channel group, N is an integral multiple of K, and the N data code block streams correspond to N virtual channels of a second virtual channel group;
searching for alignment marker code blocks inserted into code block streams that are formed by the data code block streams on the M virtual channels and FEC check code blocks on the N virtual channels;
aligning and reassembling, according to the alignment marker code blocks, the code block streams on the (M+N) virtual channels, to obtain mxt2 data code blocks, nxt2 FEC check code blocks, and i idle code blocks, wherein mxt2 is less than or equal to m_max, m_max is t1 times the value of M, nxt2 is less than n_max, n_max is t1 times the value of N, t1 and t2 are positive integers, and i equals n_max minus n; and
discarding the alignment marker code blocks and the i idle code blocks after completing the alignment and reassembly by using the alignment marker code blocks.

39. The apparatus according to claim 37 or 38, wherein the processor further performs the following steps:
correcting, at an FEC coding processing sublayer, a bit error in the mxt2 data code blocks by using the nxt2 FEC check code blocks; and
discarding the nxt2 FEC check code blocks after completing the correcting a bit error, and inputting mxt2 data code blocks that are obtained after correcting the bit error to a physical coding sublayer.

40. The apparatus according to claim 37 or 38, wherein the processor further performs the following step:
after acquiring the nxt2 FEC check code blocks by alignment and reassembly, discarding the nxt2 FEC check code blocks, and inputting the mxt2 data code blocks to a physical coding sublayer.
